# EUROPEAN PATENT APPLICATION

(11) **EP 4 529 976 A1**
(43) Date of publication of application: **02.04.2025**
(21) Application number: 24201649.1
(22) Date of filing: 20.09.2024
(51) Int. Cl.: B01D 53/94, B01J 23/63, B01J 35/00, F01N 3/10, B01J 23/89, B01J 37/02, B01J 37/03

(54) **METAL PROMOTED PALLADIUM AND/OR PLATINUM-CONTAINING CATALYSTS FOR GASOLINE ENGINE EXHAUST GAS TREATMENTS**

(30) Priority: 26.09.2023 US 202363585239 P
(71) Applicant: Johnson Matthey Public Limited Company, London EC2V 7AD (GB)
(72) Inventor: ZHENG, Qinghe, 19087 Wayne (US); LU, Jing, 19087 Wayne (US); HOWARD, Michael, 19087 Wayne (US); KURASHIGE, Wataru, 329-1412 Kitsuregawa (JP); NAGAOKA, Shuhei, 329-1412 Sakura Shi (JP)
(74) Representative: Boult Wade Tennant LLP

(57) **Abstract**

A three-way catalyst article, and its use in an exhaust system for internal combustion engines, is disclosed. The catalyst article for treating exhaust gas comprising: a substrate comprising an inlet end and an outlet end with an axial length L, a first catalytic region comprising a first platinum group metal (PGM) component and a first metal component, wherein the first PGM component comprises platinum, palladium, or a combination thereof; wherein the first metal component is Mn, Mg, Fe, Cu, Zn, or a combination thereof; and wherein the molar ratio between the first metal component and the first PGM component in the first catalytic region is from 120: 1 to 1:5.

## Description

### FIELD OF THE INVENTION

The present invention relates to a catalyzed article useful in treating exhaust gas emissions from gasoline engines.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalytic conversion catalysts, are widely utilized to reduce the amount of these pollutants emitted to atmosphere. A commonly used catalyst for gasoline engine exhaust treatments is the TWC (three way catalyst). TWCs perform three main functions: (1) oxidation of CO; (2) oxidation of unburnt HCs; and (3) reduction of NOₓ.

Despite advances in TWC technology, there remains a need for improved catalytic converters for certain engine platforms that simultaneously improve the performance in cold start stage, giving better light off performance, as well as at hot transient stage, give better window performance toward air-to-fuel ratio (A/F). Flexible use of Pd and/or Pt in TWC is necessary to mitigate the potential risk of PGM price fluctuation as well as to save and efficient use of natural resources of PGM. Particularly, both Pd- and Pt- containing catalysts/catalytic layers have good performance in oxidation of carbon monoxide and hydrocarbon species, but disadvantages in NOₓ reduction performance as compared to Rh-containing catalysts/catalytic layers. Furthermore, Pt has disadvantages in the overall performances of TWC as respect to Pd. This invention resolves these challenges amongst others, with a specific focus on improving TWC performance for Pd- and/or Pt-containing catalysts/catalytic layers.

### SUMMARY OF THE INVENTION

One aspect of the present disclosure is directed to a catalytic article for treating exhaust gas comprising: a substrate comprising an inlet end and an outlet end with an axial length L, a first catalytic region comprising a first platinum group metal (PGM) component and a first metal component, wherein the first PGM component comprises platinum, palladium, or a combination thereof; wherein the first metal component is Mn, Mg, Fe, Cu, Zn, or a combination thereof; and wherein the molar ratio between the first metal component and the first PGM component in the first catalytic region is from 120: 1 to 1:5.

The invention also encompasses an exhaust system for internal combustion engines that comprises the three-way catalyst component of the invention.

The invention also encompasses treating an exhaust gas from an internal combustion engine, in particular for treating exhaust gas from a gasoline engine. The method comprises contacting the exhaust gas with the three-way catalyst component of the invention.

### BRIEF DESCRIPTION OF THE DRAWINGS

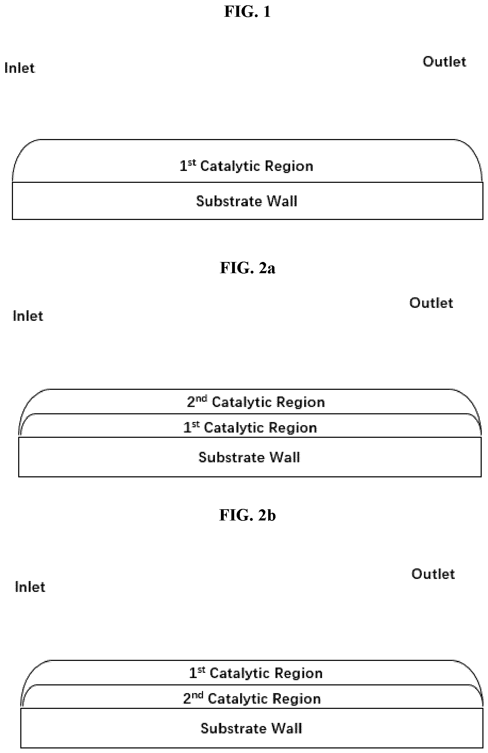

**FIG. 1** shows one embodiment according to the present invention, which contains first catalytic region with a length of 100% to the axial length L of the substrate (single layer).
**FIG. 2a** shows one embodiment according to the present invention, the first catalytic region extends 100% of the axial length L, as bottom layer; the second catalytic region extends 100% of the axial length L, as top layer.
**FIG. 2b** depicts a variation of **FIG. 2a****.**

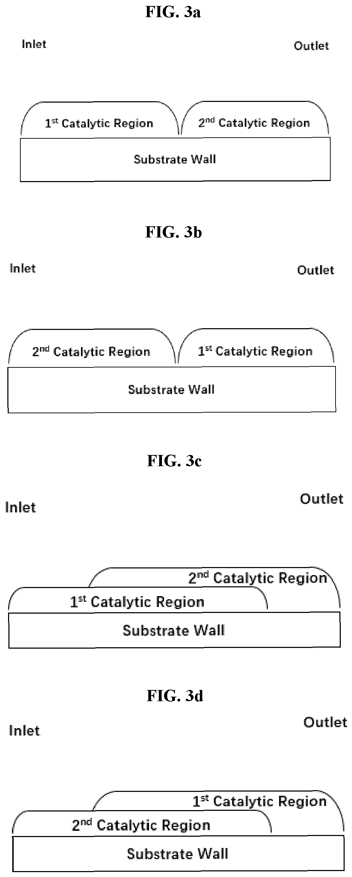

**FIG. 3a** shows one embodiment according to the present invention, the first catalytic region extends less than 100% of the axial length L, from the inlet end; the second catalytic region extends less than 100% of the axial length L, from the outlet end. The total length of the second and the first catalytic region is equal or less than the axial length L.
**FIG. 3b** depicts a variation of **FIG. 3a****.**
**FIG. 3c** shows one embodiment according to the present invention, the first catalytic region extends less than 100% of the axial length L, from the inlet end; the second catalytic region extends less than 100% of the axial length L, from the outlet end. The total length of the second and the first catalytic region is greater than the axial length L.
**FIG. 3d** depicts a variation of **FIG. 3c****.**

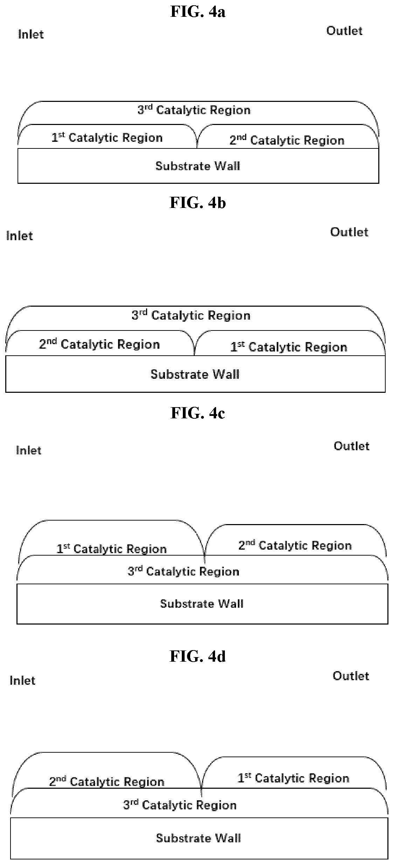

**FIG. 4a** shows one embodiment according to the present invention, the first catalytic region extends less than 100% of the axial length L, from the inlet end; the second catalytic region extends less than 100% of the axial length L, from the outlet end. The total length of the second and the first catalytic region is less than or equal to the axial length L. The 3^{rd} catalytic region extends 100% of the axial length L and overlies the first and second catalytic regions as top layer.
**FIG. 4b** depicts a variation of **FIG. 4a****.**
**FIG. 4c** shows one embodiment according to the present invention, the 3^{rd} catalytic region extends 100% of the axial length L as bottom layer. The first catalytic region extends less than 100% of the axial length L, from the inlet end; the second catalytic region extends less than 100% of the axial length L, from the outlet end. The total length of the second and the first catalytic region is less than or equal to the axial length L.
**FIG. 4d** depicts a variation of **FIG. 4c****.**

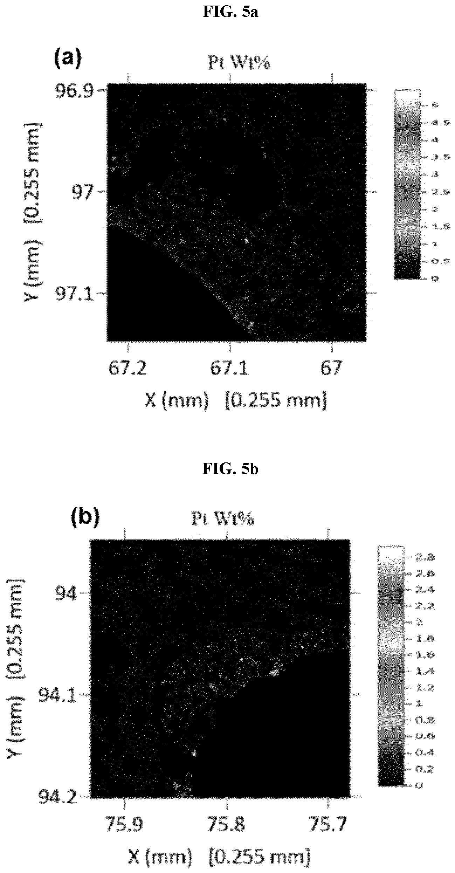

**FIG. 5a** shows Pt elemental mapping of EPMA analysis in cross-sectional view of fresh core cut from the coated block of Example Reference Catalyst 1; **FIG. 5b** shows Pt elemental mapping of EPMA analysis in cross-sectional view of fresh core cut from the coated block of Example Catalyst 2.

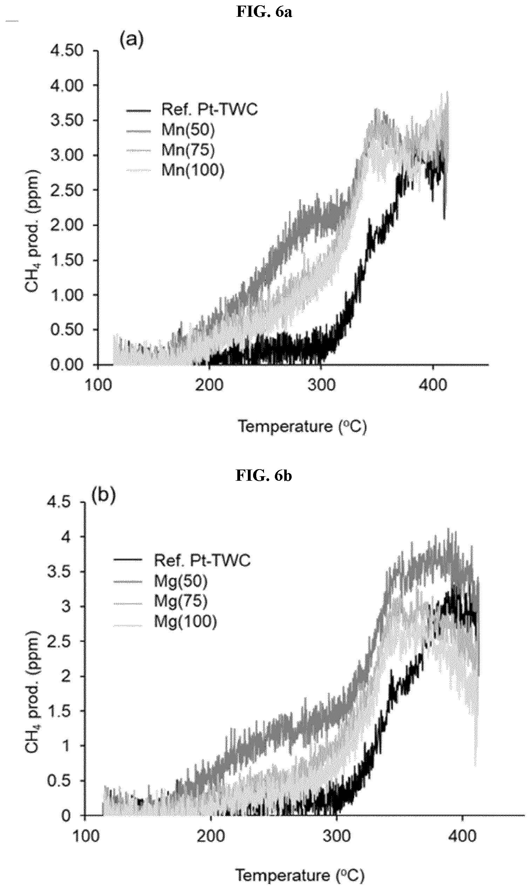

**FIG. 6a** shows CH₄ produced during Ethanol Temperature-programmed surface reduction (EtOH-TPSR) of thermal redox-aged Reference Catalyst 1 and Catalysts 2-4; **FIG. 6b** shows CH₄ produced during Ethanol Temperature-programmed surface reduction (EtOH-TPSR) of thermal redox-aged Reference Catalyst 1 and 9-11.

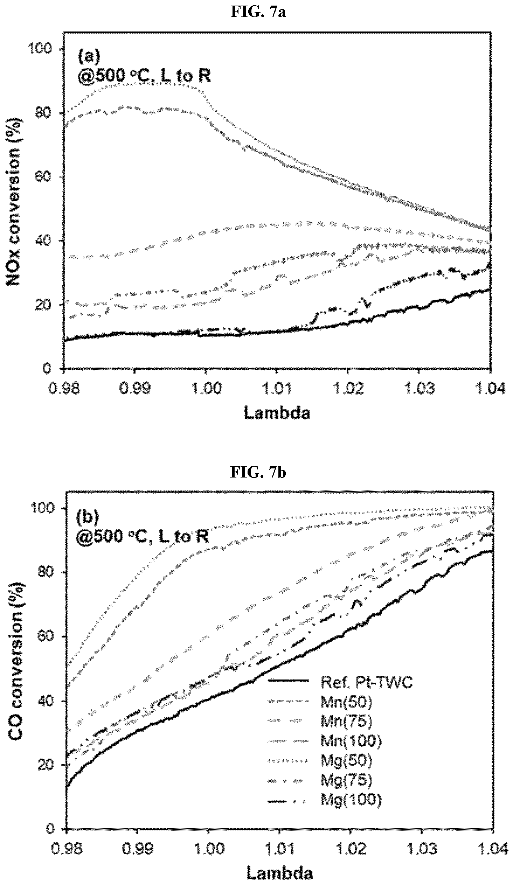

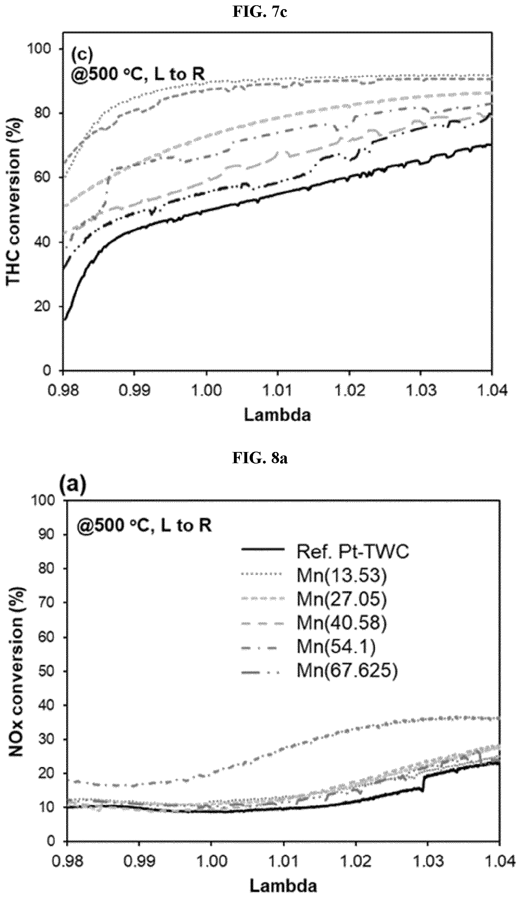

**FIG. 7a** shows NOₓ conversion performance during TWC lambda sweep at 500 °C tests for aged Reference Catalyst 1 and Catalysts 2-4 and 9-11; **FIG. 7b** shows CO conversion performance during TWC lambda sweep at 500 °C tests for aged Reference Catalyst 1 and Catalysts 2-4 and 9-11; **FIG. 7c** shows THC conversion performance during TWC lambda sweep at 500 °C tests for aged Reference Catalyst 1 and Catalysts 2-4 and 9-11.

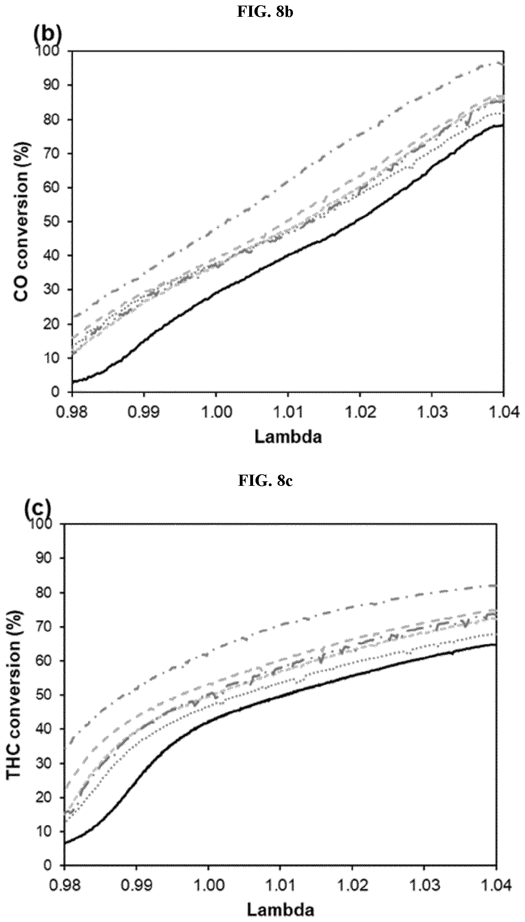

**FIG. 8a** shows NOₓ conversion performance during TWC lambda sweep at 500 °C tests for aged Reference Catalyst 24 and Catalysts 25-29; **FIG. 8b** shows CO conversion performance during TWC lambda sweep at 500 °C tests for aged Reference Catalyst 24 and Catalysts 25-29; **FIG. 8c** shows THC conversion performance during TWC lambda sweep at 500 °C tests for aged Reference Catalyst 24 and Catalysts 25-29.

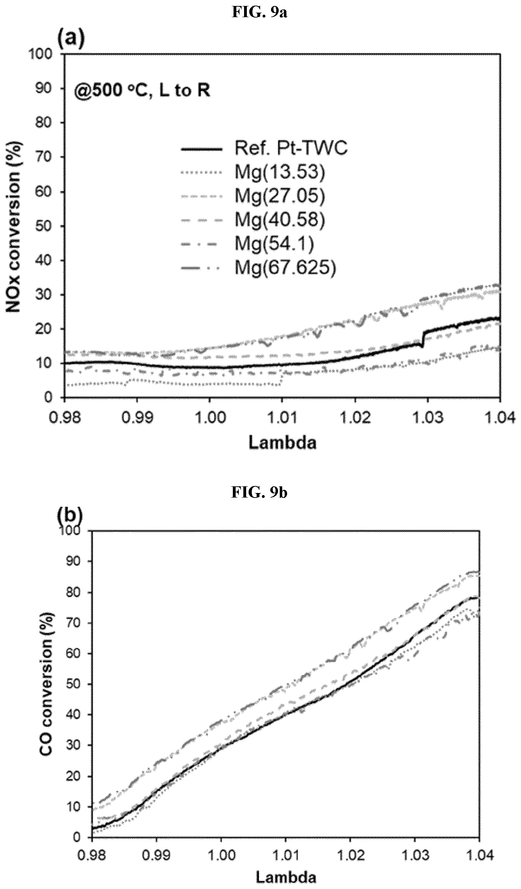

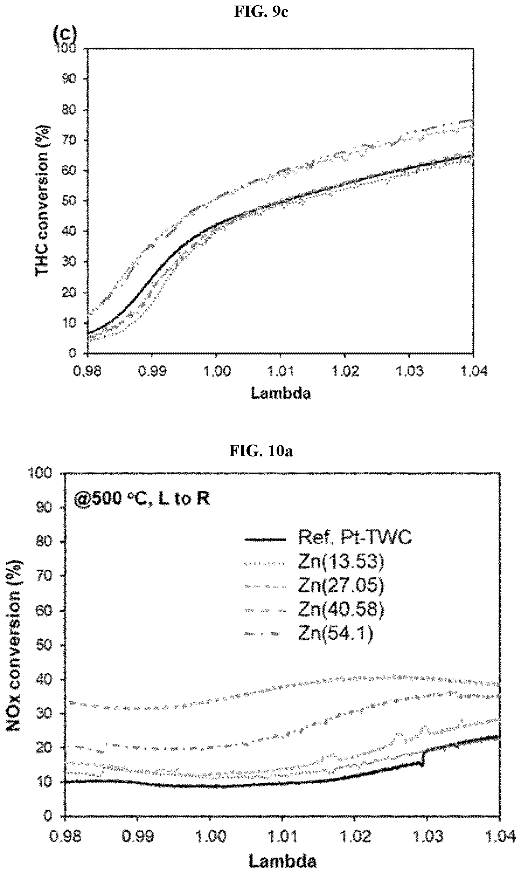

**FIG. 9a** shows NOₓ conversion performance during TWC lambda sweep at 500 °C tests for aged Reference Catalyst 24 and Catalysts 30-34; **FIG. 9b** shows CO conversion performance during TWC lambda sweep at 500 °C tests for aged Reference Catalyst 24 and Catalysts 30-34; **FIG. 9c** shows THC conversion performance during TWC lambda sweep at 500 °C tests for aged Reference Catalyst 24 and Catalysts 30-34.

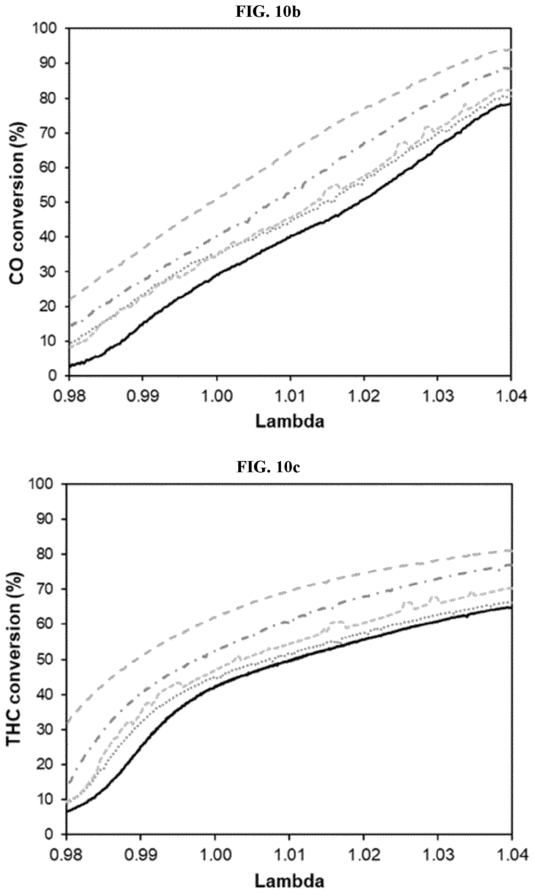

**FIG. 10a** shows NOₓ conversion performance during TWC lambda sweep at 500 °C tests for aged Reference Catalyst 24 and Catalysts 35-38; **FIG. 10b** shows CO conversion performance during TWC lambda sweep at 500 °C tests for aged Reference Catalyst 24 and Catalysts 35-38; **FIG. 10c** shows THC conversion performance during TWC lambda sweep at 500 °C tests for aged Reference Catalyst 24 and Catalysts 35-38.

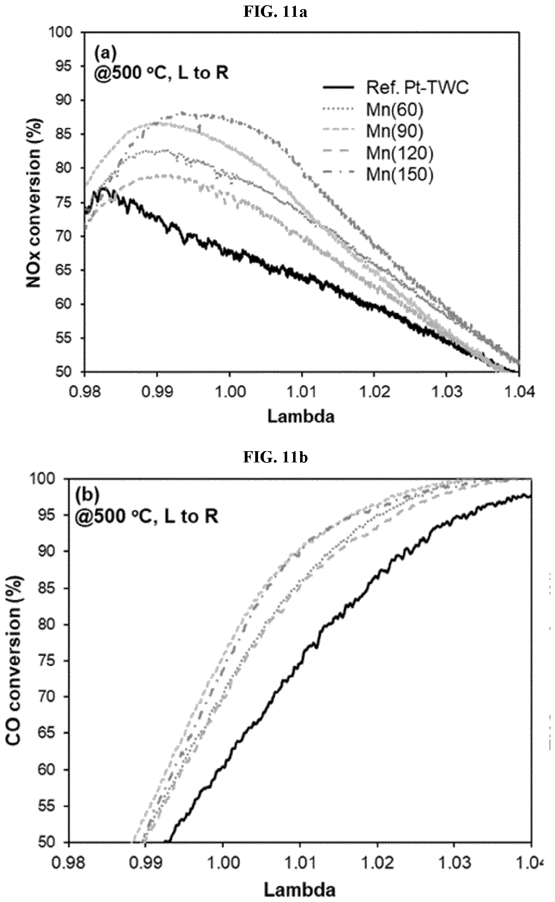

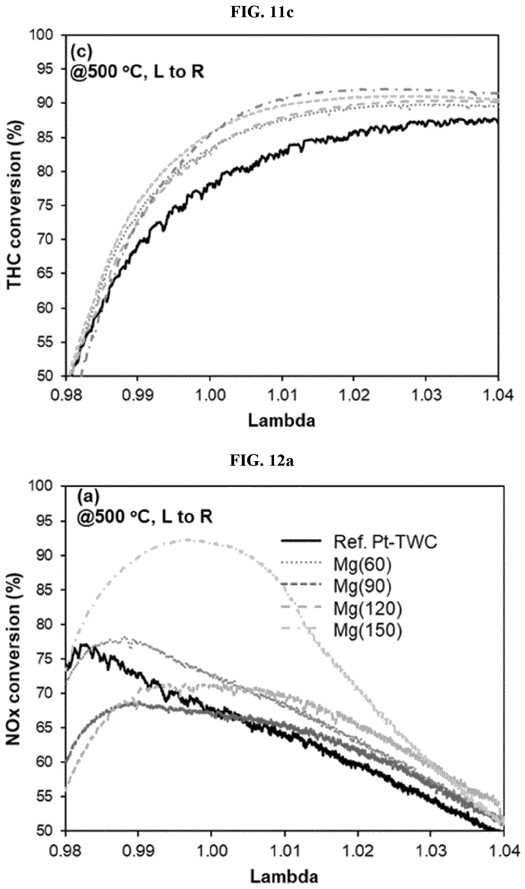

**FIG. 11a** shows NOₓ conversion performance during TWC lambda sweep at 500 °C tests for aged Reference Catalyst 39 and Catalysts 40-43; **FIG. 11b** shows CO conversion performance during TWC lambda sweep at 500 °C tests for aged Reference Catalyst 39 and Catalysts 40-43; **FIG. 11c** shows THC conversion performance during TWC lambda sweep at 500 °C tests for aged Reference Catalyst 39 and Catalysts 40-43.

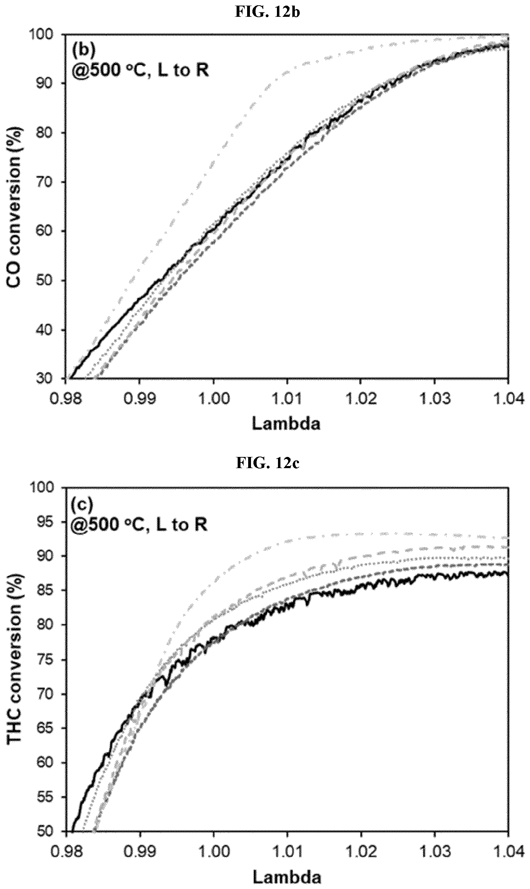

**FIG. 12a** shows NOₓ conversion performance during TWC lambda sweep at 500 °C tests for aged Reference Catalyst 39 and Catalysts 44-47; **FIG. 12b** shows CO conversion performance during TWC lambda sweep at 500 °C tests for aged Reference Catalyst 39 and Catalysts 44-47; **FIG. 12c** shows THC conversion performance during TWC lambda sweep at 500 °C tests for aged Reference Catalyst 39 and Catalysts 44-47.

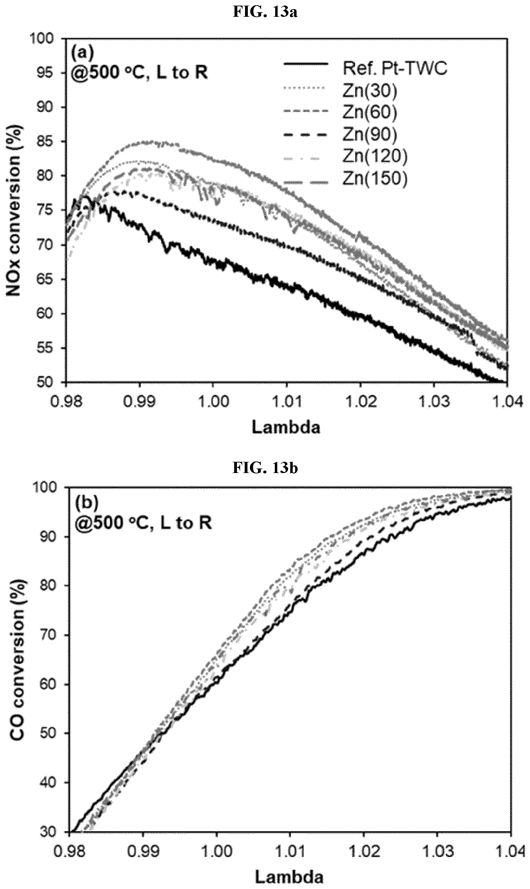

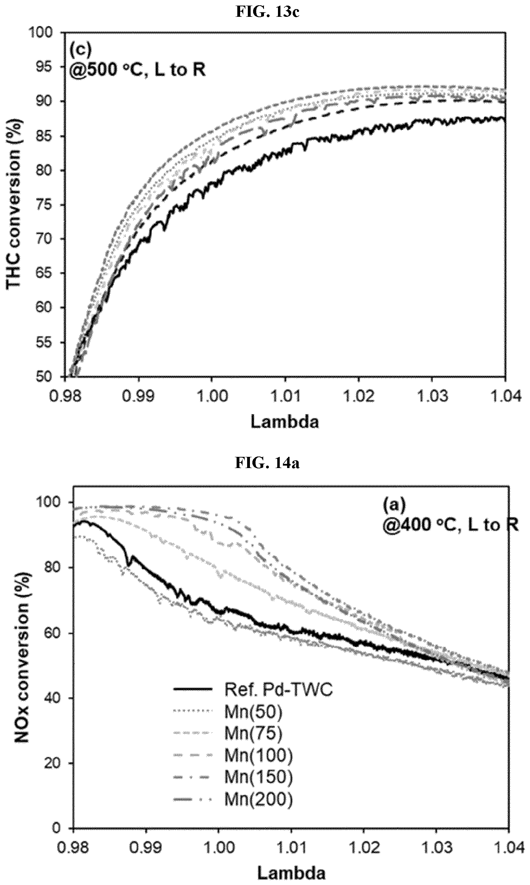

**FIG. 13a** shows NOₓ conversion performance during TWC lambda sweep at 500 °C tests for aged Reference Catalyst 39 and Catalysts 48-52; **FIG. 13b** shows CO conversion performance during TWC lambda sweep at 500 °C tests for aged Reference Catalyst 39 and Catalysts 48-52; **FIG. 13c** shows THC conversion performance during TWC lambda sweep at 500 °C tests for aged Reference Catalyst 39 and Catalysts 48-52.

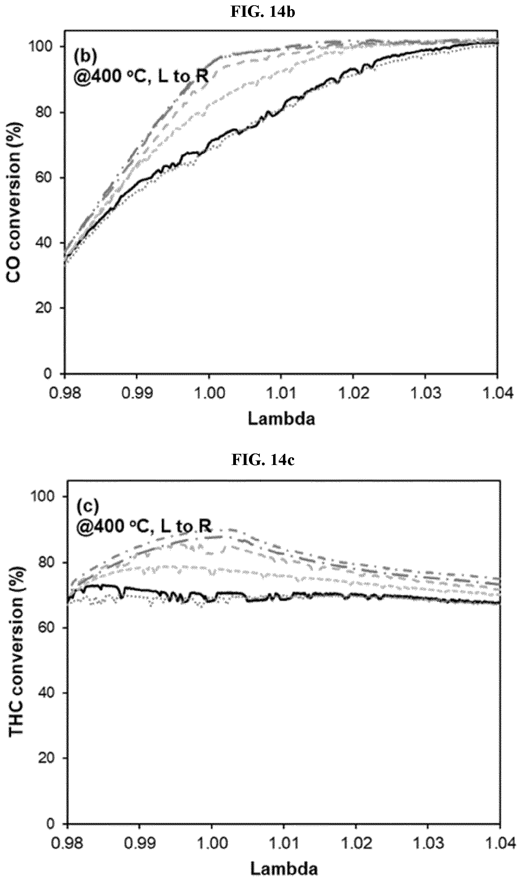

**FIG. 14a** shows NOₓ conversion performance during TWC lambda sweep at 400 °C tests for aged Reference Catalyst 57 and Catalysts 58-62; **FIG. 14b** shows CO conversion performance during TWC lambda sweep at 400 °C tests for aged Reference Catalyst 57 and Catalysts 58-62; **FIG. 14c** shows THC conversion performance during TWC lambda sweep at 400 °C tests for aged Reference Catalyst 57 and Catalysts 58-62.

### DETAILED DESCRIPTION OF THE INVENTION

The present invention is directed to the catalytic treatment of internal combustion engine exhaust gas, such as after-treatment of gasoline and other engines, and to related catalysts compositions, catalytic articles, and systems. More specifically, the invention relates the simultaneous treatment of NOₓ, CO, and HC using a TWC converter/system in a vehicular exhaust system. Most of technology development in the TWC area have been focused on improvement of Rh- and Pd-based catalyst, with Rh and Pd usually in separate layers/zones in a catalytic system. The performance benefit is usually heavily dependent on the usage of high loading Pd, which leads to serious economic and environmental challenges, such as drastic increment of Pd market price and exhaustion of Pd natural resources. Alternatively, partial/complete replacement of Pt in Pd-containing TWC catalyst/ catalytic layer or zone is a promising approach by allowing flexible utilization of Pd and/or Pt according to market fluctuation. However, a common technical challenge is associated with low intrinsic TWC activity of Pt as compared to Pd, especially after high-temperature thermal redox aging, which makes it difficult to achieve desirable TWC conversion targets by Pt. In the present disclosure, the inventors surprisingly discovered that functionalization of Pt-containing catalyst by doping alkali/ transition metal component of Mn, Mg, Zn, Fe or Cu have led to significantly improved TWC performance after redox aging. The inventors also found that certain metal dopants such as Mn, Mg, and Zn also showed promotional effect for Pd-containing TWC. The first discovery allows partial/complete replacement of Pd with Pt, whereas the latter one allows Pd thrifting (Pd loading reduction), both without compromising TWC performance. The inventors further demonstrated TWC performance improvement with various Pd- and Pt containing TWC systems under light-off, lambda sweep, and engine/vehicle tests with this invention. In summary, the application of the present invention contributes to technical benefit by improving TWC performance of Pd- and/or Pt-containing TWC, economic benefit by allowing partial/complete substitution of Pd by Pt, as well as environmental sustainability by saving PGM natural resources.

One aspect of the present disclosure is directed to a catalytic article for treating exhaust gas comprising: a substrate comprising an inlet end and an outlet end with an axial length L, a first catalytic region comprising a first platinum group metal (PGM) component and a first metal component, wherein the first PGM component comprises platinum, palladium, or a combination thereof; wherein the first metal component is Mn, Mg, Fe, Cu, Zn, or a combination thereof; and wherein the molar ratio between the first metal component and the first PGM component in the first catalytic region is from 120: 1 to 1:5.

Through intensive research, the inventors have found that by incorporating certain amount of alkaline earth! transition metal (such as Mg, Mn, Zn, Fe or Cu) into Pt-containing TWC catalyst formulations, these novel compositions have demonstrated excellent catalytic properties (*e.g*., all the catalytic conversions of THC/NMHC, CO and NOₓ could get improvement by direct addition of metal dopant in its form of metal salt precursor to Pt-based catalyst during catalyst preparation as described in this invention.). The inventors also found that by incorporating certain amount of alkaline earth! transition metal such as Mn, Mg, and Zn into the Pd-containing TWC catalyst formulations, these novel compositions have demonstrated excellent catalytic properties (*e.g*., all the catalytic conversions of THC/NMHC, CO and NOₓ could get improvement by direct addition of metal dopant in its form of metal salt precursor to Pd-based catalyst during catalyst preparation as described in this invention.).

### First Catalytic Region

The molar ratio between the first metal component and the first PGM component is based on metal element. In some embodiments, the molar ratio between the first metal component and the first PGM component in the first catalytic region can be from 120:1 to 1:2, from 100:1 to 1:2, from 100:1 to 1:1, or from 20:1 to 1:5.

The first PGM component can be Pd, Pt, or Pd and Pt. In further embodiments, the first metal component can be Mn, Mg, Zn, or a combination thereof.

In certain embodiments, the first metal component can be Mn. In some embodiments, the molar ratio between Mn and the first PGM component in the first catalytic region can be from 50:1 to 1:4. In further embodiments, the first PGM component can be Pt, and the molar ratio between Mn and Pt in the first catalytic region can be from 50:1 to 1:1, from 44:1 to 4:1, from 40:1 to 4:1, from 30:1 to 4:1, from 25:1 to 4:1, from 20:1 to 4:1, or from 10:1 to 4:1. In other embodiments, the first PGM component can be Pd, and the molar ratio between Mn and Pd in the first catalytic region can be from 20:1 to 1:4, from 10:1 to 1:2, from 9:1 to 1:2, from 8:1 to 1:2, from 7:1 to 1:2, from 6:1 to 1:2, or from 5:1 to 1:2.

In some embodiments, the first metal component can be Mg. In some embodiments, the molar ratio between Mg and the first PGM component in the first catalytic region can be from 100:1 to 1:1. In further embodiments, the first PGM component can be Pt, and the molar ratio between Mg and Pt in the first catalytic region can be from 100:1 to 5:1, from 10:1 to 8:1, from 90:1 to 8:1, from 80:1 to 8:1, from 70:1 to 8:1, or from 60:1 to 8:1. In other embodiments, the first PGM component can be Pd, and the molar ratio between Mg and Pd in the first catalytic region can be from 20:1 to 1:1, from 15:1 to 2:1, from 13:1 to 2:1, from 12:1 to 2:1, from 11:1 to 2:1, from 15:1 to 5:1, or from 11:1 to 5:1.

In certain embodiments, the first metal component can be Zn. In some embodiments, the molar ratio between Zn and the first PGM component in the first catalytic region can be from 20:1 to 1:2. In further embodiments, the first PGM component can be Pt, and the molar ratio between Zn and Pt in the first catalytic region can be from 20:1 to 1:1, from 15:1 to 3:2, from 13:1 to 3:2, from 12:1 to 3:2, or from 11:1 to 3:2. In other embodiments, the first PGM component can be Pd, and the molar ratio between Zn and Pd in the first catalytic region can be from 10:1 to 1:2, from 5:1 to 1:2, from 3:1 to 1:2, from 10:1 to 1:1, from 5:1 to 1:1, or from 3:1 to 1:1.

In some embodiments, the first metal component can be Fe and/or Cu. In some embodiments, the molar ratio between Fe and/or Cu and the first PGM component in the first catalytic region can be from 40:1 to 1:5. In further embodiments, the first PGM component can be Pt, and the molar ratio between Fe and/or Cu and Pt in the first catalytic region can be from 40:1 to 5:1, from 35:1 to 8:1, from 35:1 to 9:1, from 35:1 to 10:1, or from 35:1 to 17:1. In other embodiments, the first PGM component can be Pd, and the molar ratio between Fe and/or Cu and Pd in the first catalytic region can be from 10:1 to 1:5; 5:1 to 1:5, from 4:1 to 1:4, from 3:1 to 1:3, or from 2:1 to 1:2.

In some embodiments, the first catalytic region can further comprise rhodium. In other embodiments, the first catalytic region is essentially free of other PGM components other than the first PGM component.

The first catalytic region can further comprise a first oxygen storage capacity (OSC) material and/or a first inorganic oxide.

The first OSC material can be cerium oxide, zirconium oxide, a ceria-zirconia mixed oxide, an alumina-ceria-zirconia mixed oxide, or a combination thereof. More preferably, the first OSC material comprises the ceria-zirconia mixed oxide, the alumina-ceria-zirconia mixed oxide or a combination thereof. The ceria-zirconia mixed oxide can further comprise dopants, such as lanthanum, neodymium, praseodymium, yttrium oxides, *etc.* The first OSC material may function as a support material for the first PGM component (e.g., as the first PGM support material). In some embodiments, the first OSC material comprises the ceria-zirconia mixed oxide and the alumina-ceria-zirconia mixed oxide.

The first inorganic oxide is preferably an oxide of Groups 2, 3, 4, 5, 13 and 14 elements. The first inorganic oxide is preferably selected from the group consisting of alumina, magnesia, silica, zirconia, barium oxides, and mixed oxides or composite oxides thereof. Particularly preferably, the first inorganic oxide is alumina, lanthanum-alumina, zirconia, or a magnesia/alumina composite oxide. One especially preferred first inorganic oxide is alumina or lanthanum-alumina.

The first OSC material and the first inorganic oxide can have a weight ratio of no greater than 10: 1; preferably, no greater than 8: 1 or 5: 1; more preferably, no greater than 4: 1 or 3:1; most preferably, no greater than 2: 1.

Alternatively, the first OSC material and the first inorganic oxide can have a weight ratio of 10:1 to 1:10; preferably, 8:1 to 1:8 or 5: 1 to 1:5; more preferably, 4:1 to 1:4 or 3: 1 to 1:3; and most preferably, 2:1 to 1:2.

In some embodiments, the first OSC material and the first inorganic oxide can have a weight ratio of no less than 2:1. In further embodiments, the first OSC material and the first inorganic oxide can have a weight ratio of no less than 10:1. In another further embodiments, the first OSC material and the first inorganic oxide can have a weight ratio of no less than 20:1 or no less than 30:1. In yet another further embodiments, the first OSC material and the first inorganic oxide can have a weight ratio of no less than 40:1 or no less than 50:1.

The first catalytic region may further comprise a first alkali or alkaline earth metal. In other embodiments, the first catalytic region can be substantially free of the first alkali or alkaline earth metal. The first alkali or alkaline earth metal is preferably barium, or strontium, and mixed oxides or composite oxides thereof. Preferably the barium or strontium, where present, is loaded in an amount of 0.1 to 15 wt.%, and more preferably 3 to 10 wt.% of barium or strontium, based on the total weight of the first catalytic region.

Preferably the barium or the strontium is present as BaCO₃ or SrCO₃. Such a material can be performed by any method known in the art, for example incipient wetness impregnation or spray-drying.

In some embodiments, the first PGM component loading in the first catalytic region can be 5-300 g/ft³, 10-200 g/ft³, or 50-150 g/ft³. In further embodiments, wherein the first PGM component is Pd, the first PGM component loading in the first catalytic region can be 5-300 g/ft³, 10-200 g/ft³, or 50-150 g/ft³. In further embodiments, wherein the first PGM component is Pt, the first PGM component loading in the first catalytic region can be 5-300 g/ft³, 10-200 g/ft³, or 50-150 g/ft³.

The first metal component can be incorporated into the first catalytic region solely by direct addition of its metal salt precursors during mixing with other components in an one-pot catalyst preparation, whereas different sequence of addition can be applied. In some embodiments, the first metal component can be incorporated after the first PGM component, the first OSC material, and the first inorganic oxide are incorporated and mixed. In other embodiments, the first metal component can be incorporated before either the first OSC material, or the first inorganic oxide is incorporated. In yet other embodiments, the first metal component can be incorporated before the first PGM component is incorporated.

In some embodiments, the first catalytic region can be no more than 10 wt.%, no more than 5 wt.%, or no more than 2 wt.% of the first metal component (based on element).

As demonstrated in the Examples below, the catalyst article in this aspect can be applied as a TWC catalyst for treating exhaust gas produced by gasoline engines.

The first catalytic region can extend for 100 percent of the axial length L. (*E.g., see* **FIGs. 1, 2a, and 2b****).** In some embodiments, the first catalytic region can extend for 20 to 99%, 30 to 90%, or 40-80% of the axial length L. Alternatively, the first catalytic region can extend for 30 to 70 percent of the axial length L. Preferably, for 40 to 60 percent, more preferably, 45 to 55 percent of the axial length L, *(E.g., see* **FIGs. 3a-3d****).**

The total washcoat loading of the first catalytic region can be less than 3.5 g/in³; preferably, less than 3.0 g/in³ or 2.5 g/in³. Alternatively, the total washcoat loading of the first catalytic region can be from 0.5 to 3.5 g/in³; preferably, can be from 0.6 to 3 g/in³ or 0.7 to 2.5 g/in³.

### Second Catalytic Region

The catalytic article may further comprise a second catalytic region.

The second catalytic region can further comprise a second PGM component, a second oxygen storage capacity (OSC) material, a second alkali or alkaline earth metal component, and/or a second inorganic oxide.

The second PGM component can be selected from the group consisting of platinum, palladium, rhodium, and a mixture thereof. In some embodiments, the second PGM component can be Pd, Rh or a mixture thereof. In other embodiments, the second PGM component can be Pt, Rh or a mixture thereof. In further embodiments, the second PGM component can be Rh.

The second OSC material can be cerium oxide, zirconium oxide, a ceria-zirconia mixed oxide, an alumina-ceria-zirconia mixed oxide, or a combination thereof. More preferably, the second OSC material comprises the ceria-zirconia mixed oxide, the alumina-ceria-zirconia mixed oxide, or a combination thereof. In addition, the second OSC material may further comprise one or more of dopants like lanthanum, neodymium, praseodymium, yttrium *etc.* Moreover, the second OSC material may have the function as a support material for the second PGM component. In some embodiments, the second OSC material comprises the ceria-zirconia mixed oxide and the alumina-ceria-zirconia mixed oxide.

The ceria-zirconia mixed oxide can have a weight ratio of zirconia to ceria at least 50:50; preferably, higher than 60:40; more preferably, higher than 70:30. Alternatively, the ceria-zirconia mixed oxide also can have a weight ratio of ceria to zirconia less than 50:50, preferably, less than 40:60, more preferably, less than 30:70.

The second OSC material (*e.g.*, ceria-zirconia mixed oxide) can be from 10 to 90 wt.%; preferably, 25-75 wt.%; more preferably, 30-60 wt.%, based on the total washcoat loading of the second catalytic region.

The second OSC material loading in the second catalytic region can be less than 2 g/in³. In some embodiments, the second OSC material loading in the second catalytic region is no greater than 1.5 g/in³, 1.2 g/in³, 1 g/in³, 0.8 g/in³, or 0.7 g/in³.

The second alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the second catalytic region.

It is even more preferable that the second alkali or alkaline earth metal is strontium. The strontium, where present, is preferably present in an amount of 0.1 to 15 wt.%, and more preferably 3 to 10 wt.%, based on the total weight of the second catalytic region.

It is also preferable that the second alkali or alkaline earth metal is mixed oxides or composite oxide of barium and strontium. Preferably, the mixed oxides or composite oxide of barium and strontium is present in an amount of 0.1 to 15 wt.%, and more preferably 3 to 10 wt.%, based on the total weight of the second catalytic region. It is more preferable that the second alkali or alkaline earth metal is composite oxide of barium and strontium.

Preferably the barium or strontium is present as BaCO₃ or SrCO₃. Such a material can be performed by any method known in the art, for example incipient wetness impregnation or spray-drying.

The second inorganic oxide is preferably an oxide of Groups 2, 3, 4, 5, 13 and 14 elements. The second inorganic oxide is preferably selected from the group consisting of alumina, magnesia, silica, zirconia, barium oxides, and mixed oxides or composite oxides thereof. Particularly preferably, the second inorganic oxide is alumina, lanthanum-alumina, zirconia, or a magnesia/alumina composite oxide. One especially preferred second inorganic oxide is alumina or lanthanum-alumina.

The second OSC material and the second inorganic oxide can have a weight ratio of no greater than 10:1; preferably, no greater than 8:1 or 5:1; more preferably, no greater than 4:1 or 3:1; most preferably, no greater than 2:1.

Alternatively, the second OSC material and the second inorganic oxide can have a weight ratio of 10:1 to 1:10; preferably, 8:1 to 1:8 or 5:1 to 1:5; more preferably, 4:1 to 1:4 or 3:1 to 1:3; and most preferably, 2:1 to 1:2.

In some embodiments, the second OSC material and the second inorganic oxide can have a weight ratio of no less than 2:1. In further embodiments, the second OSC material and the second inorganic oxide can have a weight ratio of no less than 10:1. In another further embodiments, the second OSC material and the second inorganic oxide can have a weight ratio of no less than 20:1 or no less than 30:1. In yet another further embodiments, the second OSC material and the second inorganic oxide can have a weight ratio of no less than 40:1 or no less than 50:1.

The total washcoat loading of the second catalytic region can be less than 3.5 g/in³; preferably, less than 3.0 g/in³ or 2.5 g/in³. Alternatively, the total washcoat loading of the first catalytic region can be from 0.5 to 3.5 g/in³; preferably, can be from 0.6 to 3 g/in³ or 0.7 to 2.5 g/in³.

The second catalytic region can extend for 100 percent of the axial length L. (*E.g., see* **FIGs. 2a and 2b****)**

The second catalytic region can extend for 30 to 70 percent of the axial length L. Preferably, for 40 to 60 percent, more preferably, 45 to 55 percent of the axial length L. and most preferably, the total length of the second region and the first region is equal or greater than the axial length L (*E.g., see* **FIGs. 3a-3d****).**

The second catalytic region can overlap with the first catalytic region for 0.1 to 99 percent of the axial length L *(e.g., see* **FIGs. 3c** and **3d****,** the first catalytic region can overlie the second catalytic region or the second catalytic region can overlie the first catalytic region). Alternatively, the total length of the second catalytic region and the first catalytic region can equal to the axial length L *(e.g., see* **FIGs. 3a** and **3b**)**.** In yet another alternative, total the length of the second catalytic region and the first catalytic region can be less than the axial length L, for example, no greater than 95%, 90%, 80%, or 70% of the axial length L.

In some embodiments, the first catalytic region can be supported/deposited directly on the substrate. In certain embodiments, the second catalytic region can be supported/deposited directly on the substrate.

### Third Catalytic Region

The catalytic article may further comprise a third catalytic region.

The third catalytic region can further comprise a third PGM component, a third oxygen storage capacity (OSC) material, a third alkali or alkaline earth metal component, and/or a third inorganic oxide.

The third PGM component can be selected from the group consisting of platinum, palladium, rhodium, and a mixture thereof. In some embodiments, the third PGM component can be Pd, Rh or a mixture thereof.

The third OSC material can be cerium oxide, zirconium oxide, a ceria-zirconia mixed oxide, an alumina-ceria-zirconia mixed oxide, or a combination thereof. More preferably, the third OSC material comprises the ceria-zirconia mixed oxide, the alumina-ceria-zirconia mixed oxide, or a combination thereof. In addition, the third OSC material may further comprise one or more of dopants like lanthanum, neodymium, praseodymium, yttrium *etc.* Moreover, the third OSC material may have the function as a support material for the third PGM component. In some embodiments, the third OSC material comprises the ceria-zirconia mixed oxide and the alumina-ceria-zirconia mixed oxide.

The ceria-zirconia mixed oxide can have a weight ratio of zirconia to ceria at least 50: 50; preferably, higher than 60:40; more preferably, higher than 75:25. Alternatively, the ceria-zirconia mixed oxide also can have a weight ratio of ceria to zirconia less than 50:50; preferably, less than 40:60; more preferably, less than 25:75.

The third OSC material (*e.g*., ceria-zirconia mixed oxide) can be from 10 to 90 wt.%; preferably, 25-75 wt.%; more preferably, 30-60 wt.%, based on the total washcoat loading of the third catalytic region.

The third OSC material loading in the third catalytic region can be less than 1.5 g/in³. In some embodiments, the third OSC material loading in the second catalytic region is no greater than 1.2 g/in³, 1.0 g/in³, 0.9 g/in³, 0.8 g/in³, or 0.7 g/in³.

The total washcoat loading of the third catalytic region can be less than 3.5 g/in³; preferably, no more than 3.0 g/in³, 2.5 g/in³, or 2 g/in³.

The third alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the third catalytic region.

It is even more preferable that the third alkali or alkaline earth metal is strontium. The strontium, where present, is preferably present in an amount of 0.1 to 15 wt.%, and more preferably 3 to 10 wt.%, based on the total weight of the third catalytic region.

It is also preferable that the third alkali or alkaline earth metal is mixed oxides or composite oxide of barium and strontium. Preferably, the mixed oxides or composite oxide of barium and strontium is present in an amount of 0.1 to 15 wt.%, and more preferably 3 to 10 wt.%, based on the total weight of the third catalytic region. It is more preferable that the third alkali or alkaline earth metal is composite oxide of barium and strontium.

Preferably the barium or strontium is present as BaCO₃ or SrCO₃. Such a material can be performed by any method known in the art, for example incipient wetness impregnation or spray-drying.

The third inorganic oxide is preferably an oxide of Groups 2, 3, 4, 5, 13 and 14 elements. The third inorganic oxide is preferably selected from the group consisting of alumina, magnesia, silica, zirconia, barium oxides, and mixed oxides or composite oxides thereof. Particularly preferably, the third inorganic oxide is alumina, lanthanum-alumina, zirconia, or a magnesia/alumina composite oxide. One especially preferred third inorganic oxide is alumina or lanthanum-alumina.

The third OSC material and the third inorganic oxide can have a weight ratio of no greater than 10: 1; preferably, no greater than 8: 1 or 5: 1; more preferably, no greater than 4: 1 or 3:1; most preferably, no greater than 2: 1.

Alternatively, the third OSC material and the third inorganic oxide can have a weight ratio of 10:1 to 1:10; preferably, 8:1 to 1:8 or 5: 1 to 1:5; more preferably, 4:1 to 1:4 or 3: 1 to 1:3; and most preferably, 2: 1 to 1:2.

In some embodiments, the third OSC material and the third inorganic oxide can have a weight ratio of no less than 2: 1. In further embodiments, the third OSC material and the third inorganic oxide can have a weight ratio of no less than 10:1. In another further embodiments, the third OSC material and the third inorganic oxide can have a weight ratio of no less than 20:1 or no less than 30:1. In yet another further embodiments, the third OSC material and the third inorganic oxide can have a weight ratio of no less than 40:1 or no less than 50:1.

The third catalytic region can extend for 100 percent of the axial length L *(e.g., see* **FIGs. 4a-4d****).**

The third catalytic region can be less than the axial length L, for example, no greater than 95%, 90%, 80%, or 70% of the axial length L.

The second catalytic region can overlap with the first catalytic region for 0.1 to 99 percent of the axial length L, the first catalytic region can overlie the second catalytic region, or the second catalytic region can overlie the first catalytic region). Alternatively, the either of second or first region can extend for 30 to 70 percent of the axial length L. Preferably, for 40 to 60 percent, more preferably, 45 to 55 percent of the axial length L. and most preferably, the total length of the second and the first region is equal or less than the axial length L *(e.g., see* **FIGs. 4a-4d****).**

The catalyst article of the invention may comprise further components that are known to the skilled person. For example, the compositions of the invention may further comprise at least one binder and/or at least one surfactant. Where a binder is present, dispersible alumina binders are preferred.

### Substrate

Preferably the substrate is a flow-through monolith. Alternatively, the substrate can be a wall-flow filter.

The flow-through monolith substrate has a first face and a second face defining a longitudinal direction there between. The flow-through monolith substrate has a plurality of channels extending between the first face and the second face. The plurality of channels extends in the longitudinal direction and provide a plurality of inner surfaces (e.g. the surfaces of the walls defining each channel). Each of the plurality of channels has an opening at the first face and an opening at the second face. For the avoidance of doubt, the flow-through monolith substrate is not a wall flow filter.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is from 600 to 700 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

Another aspect of the present disclosure is directed to a method for treating a vehicular exhaust gas containing NOₓ, CO, and HC using the catalyst article described herein. Catalytic converters equipped with the TWC made according to this method show improved catalytic properties compared to conventional TWC (with the same PGM loading), also show especially improved performance in cold start stage and better THC light off performance *(e.g., see* Examples 4, 5, 7-9, 11, 13, 15, 17, 19, 22, and 25-50; and **Tables 3-6, 8-10, 11-14, 16, and 18-23).**

Another aspect of the present disclosure is directed to a system for treating vehicular exhaust gas comprising the catalyst article described herein in conjunction with a conduit for transferring the exhaust gas through the system.

### DEFINTIONS

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10%, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (*e.g*., region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (*i.e.* a substantially uniform length) of at least 5% (*e.g.* ≥ 5 %) of the total length of the substrate.

The total length of a substrate is the distance between its inlet end and its outlet end (*e.g.* the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The term "one-pot" as used herein generally refers to adding and physically mixing of PGM component in its water-soluble salt form, mixed oxide, inorganic oxide, metal dopant in its water-soluble salt form, alkali/alkaline earth metal component, water, and other components to form a single washcoat.

The expression "consist essentially" as used herein limits the scope of a feature to include the specified materials or steps, and any other materials or steps that do not materially affect the basic characteristics of that feature, such as for example minor impurities. The expression "consist essentially of" embraces the expression "consisting of'.

The expression "substantially free of" as used herein with reference to a material, typically in the context of the content of a region, a layer or a zone, means that the material in a minor amount, such as ≤ 5 % by weight, preferably ≤ 2 % by weight, more preferably ≤ 1 % by weight. The expression "substantially free of" embraces the expression "does not comprise."

The expression "essentially free of" as used herein with reference to a material, typically in the context of the content of a region, a layer or a zone, means that the material in a trace amount, such as ≤ 1 % by weight, preferably ≤ 0.5 % by weight, more preferably ≤ 0.1 % by weight. The expression "essentially free of" embraces the expression "does not comprise."

Any reference to an amount of dopant, particularly a total amount, expressed as a % by weight as used herein refers to the weight of the support material or the refractory metal oxide thereof.

The term "loading" as used herein refers to a measurement in units of g/ft³ on a metal weight basis.

The following examples merely illustrate the invention. Those skilled in the art will recognize many variations that are within the spirit of the invention and scope of the claims.

### EXAMPLES

### Reference Catalyst 1

Reference Catalyst 1 is a single-layered TWC, coated on a cordierite substrate block. Catalytic region consists of Pt supported on a washcoat of CeZr mixed oxide (1 g/in³), La-stabilized alumina (1 g/in³), using Pt nitrate precursor. The washcoat loading of catalytic region was about 2 g/in³ with a Pt loading of 20 g/ft³.

### Catalyst 2

Catalyst 2 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 20 g/ft³ and a Mn loading of 50 g/ft³.

### Catalyst 3

Catalyst 3 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 20 g/ft³ and a Mn loading of 75 g/ft³.

### Catalyst 4

Catalyst 4 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 20 g/ft³ and a Mn loading of 100 g/ft³.

### Catalyst 5

Catalyst 5 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 20 g/ft³ and a Mn loading of 150 g/ft³.

### Catalyst 6

Catalyst 6 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 20 g/ft³ and a Mn loading of 200 g/ft³.

### Catalyst 7

Catalyst 7 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 20 g/ft³ and a Mn loading of 250 g/ft³.

### Reference Catalyst 8

Reference Catalyst 8 is a single-layered formulation without any PGMs coated on a cordierite substrate block. Catalytic region consists of Mn supported on a washcoat of CeZr mixed oxide (1 g/in³), La-stabilized alumina (1 g/in³), using Mn acetate tetrahydrate precursor. The washcoat loading of catalytic region was about 2 g/in³ with a Mn loading of 50 g/ft³.

### Catalysts 9-23

These Catalysts have been made similar to those in Catalysts 1-8 (the washcoat loading of catalytic region was about 2 g/in³ with a Pt loading of 20 g/ft³ and various metal loadings). And they have been summarized in **Table 1** below.

**Table 1**

| | **Mn: Pt (molar ratio)** | **Mg: Pt (molar ratio)** | **Fe: Pt (molar ratio)** | **Cu: Pt (molar ratio)** |
|---|---|---|---|---|
| **Reference Catalyst 1** | 20 g/ft³ Pt with 2 g/in³ washcoat | | | |
| **Catalyst 2** | **~9:1** (50 g/ft³ Mn; 20 g/ft³ Pt) | -- | -- | -- |
| **Catalyst 3** | **~13:1** (75 g/ft³ Mn; 20 g/ft³ Pt) | -- | -- | -- |
| **Catalyst 4** | **~18:1** (100 g/ft³ Mn; 20 g/ft³ Pt) | -- | -- | -- |
| **Catalyst 5** | **~27:1** (150 g/ft³ Mn; 20 g/ft³ Pt) | -- | -- | -- |
| **Catalyst 6** | **~36:1** (200 g/ft³ Mn; 20 g/ft³ Pt) | -- | -- | -- |
| **Catalyst 7** | **~44:1** (250 g/ft³ Mn; 20 g/ft³ Pt) | -- | -- | -- |
| **Reference Catalyst 8** | 2 g/in³ washcoat with 50 g/ft³ Mn | | | |
| **Catalyst 9** | -- | **-20:1** (50 g/ft³ Mg; 20 g/ft³ Pt) | -- | -- |
| **Catalyst 10** | -- | **~30:1** (75 g/ft³ Mg; 20 g/ft³ Pt) | -- | -- |
| **Catalyst 11** | -- | **~40:1** (100 g/ft³ Mg; 20 g/ft³ Pt) | -- | -- |
| **Catalyst 12** | -- | **~60:1** (150 g/ft³ Mg; 20 g/ft³ Pt) | -- | -- |
| **Catalyst 13** | -- | **~80:1** (200 g/ft³ Mg; 20 g/ft³ Pt) | -- | -- |
| **Catalyst 14** | -- | **~100:1** (250 g/ft³ Mg; 20 g/ft³ Pt) | -- | -- |
| **Reference Catalyst 15** | 2 g/in³ washcoat with 50 g/ft³ Mg | | | |
| **Catalyst 16** | -- | -- | **~9:1** (50 g/ft³ Fe; 20 g/ft³ Pt) | -- |
| **Catalyst 17** | -- | -- | **~17:1** (100 g/ft³ Fe; 20 g/ft³ Pt) | -- |
| **Catalyst 18** | -- | -- | **~26:1** (150 g/ft³ Fe; 20 g/ft³ Pt) | -- |
| **Catalyst 19** | -- | -- | **~35:1** (200 g/ft³ Fe; 20 g/ft³ Pt) | -- |
| **Catalyst 20** | -- | -- | -- | **~8:1** (50 g/ft³ Cu; 20 g/ft³ Pt) |
| **Catalyst 21** | -- | -- | -- | **~15:1** (100 g/ft³ Cu; 20 g/ft³ Pt) |
| **Catalyst 22** | -- | -- | -- | **~23:1** (150 g/ft³ Cu; 20 g/ft³ Pt) |
| **Catalyst 23** | -- | -- | -- | **~31:1** (200 g/ft³ Cu; 20 g/ft³ Pt) |

### EXAMPLE 1: PT DISTRIBUTION BY EPMA ANALYSIS

Reference Catalyst 1 and Catalyst 2 as fresh catalysts have been analyzed by EPMA, with Pt elemental mapping as shown in **FIGs. 5a and 5b****.** A sample was taken by cutting in cross-section direction, 0.5-inch distance from the inlet of the sample core, which was drilled from the coated block. A polished sectional mount of the sample was made by resin mounting the sample in epoxy resin, grinding and polishing, finishing with an alumina polish. EPMA measurements were undertaken using a Jeol JXA-8500F electron probe microanalyzer with five wavelength dispersive spectrometers and one SDD (silicon drift diode) EDX detector. The matrix correction method was ZAF or Phi-Rho-Z Calculations and the mass absorption coefficients dataset was LINEMU Henke (LBL, 1985) < 10KeV / CITZMU > 10 kV. Fig 5a and 5b shows that Catalyst 2 with a Mn loading of 50 g/ft³ resulted in more uniformed Pt distribution when compared with Reference Catalyst 1.

### EXAMPLE 2: OSC PERFORMANCE

Reference Catalyst 1 and Catalysts 2-23 were further aged under high-temperature thermal redox aging condition, at 1000 °C for 16 hrs, with perturbation between "Rich" (80 sec) and "Air" (20 sec) gas conditions. The "Rich" gas consists of 2.5% C₃H₆, 1.0% O₂, 10% H₂O, balanced with N₂. The "Air" gas consists of 20% O₂, 10% H₂O, balanced with N₂.

An OSC test was performed with aged Reference Catalyst 1 and Catalysts 2-4 and 9-11. The OSC test was performed by first heating the sample to 550 °C under 0.5% O₂ balanced by N₂ at a GHSV of 100,000 hr⁻¹, and keeping the temperature at 550 °C for 10 min under the same gas condition. Then the gas condition was switched from "lean" to "rich" gas compositions every 5 min for 4 times, whereas the "lean" gas contained 0.5% O₂ balanced by N₂, and the "rich" gas contained 1% CO balanced by N₂. The above steps were repeated for OSC measurement at 350 °C instead of 550 °C subsequently. An FTIR was used downstream to detect effluent gas compositions. The OSC was calculated as total mmol of O atoms chemisorbed by sample for the conversion of CO to CO₂.

As shown in **Table 2** below, Catalysts 2 and 9 demonstrated improved OSC performance for aged catalysts with Mn and Mg at lower loadings (50 g/ft³).

**Table 2**

| | **OSC at 550 °C (mmol of O)** |
|---|---|
| **Reference Catalyst 1 (aged)** | 0.67 |
| **Catalyst 2 (aged)** | 0.78 |
| **Catalyst 3 (aged)** | 0.51 |
| **Catalyst 4 (aged)** | 0.51 |
| **Catalyst 9 (aged)** | 1.12 |
| **Catalyst 10 (aged)** | 0.62 |
| **Catalyst 11 (aged)** | 0.76 |

### EXAMPLE 3 EtOH TPSR ACTIVITY TESTING

**FIGs. 6a and 6b** are respectively CH₄ produced during Ethanol Temperature-programmed surface reduction (EtOH-TPSR) of thermal redox-aged Reference Catalyst 1 and Catalysts 2-4 and 9-11. The EtOH-TPSR is a characterization test that is sensitive to surface Pd or Pt species in the sample, and is being used to qualitatively compare Pd or Pt active metal surface area among samples. The test was performed by first treating the sample in a gas flow containing 16% O₂ balanced in N₂ at 500 °C for 10 minutes, followed by cooling down in N₂ to 100 °C. A gas flow containing 4000 ppm of EtOH balanced with N₂ was subsequently introduced to the sample and dwell for 5 minutes until the sample was saturated with EtOH at 100 °C. The sample temperature was then raised to 400 °C with 10 °C min⁻¹ in the same gas flow, while the effluent gas compositions were continuously measured by FTIR. One of the products from EtOH TPSR reaction is CH₄, and its production against temperature is used to represent the EtOH TPSR reaction activity, which is then used to qualitatively describe Pd or Pt metal active surface area.

As shown in **FIGs. 6a** and **6b****,** after redox aging, improved EtOH TPSR activity with Mn²⁺ or Mg²⁺ direct addition. Lower loading Mn (50) (Catalyst 2) and Mg (50) (Catalyst 9) samples showed the best enhancement.

### EXAMPLE 4: LIGHT OFF PERFORMANCE IMPROVEMENT

Reference Catalysts 1 and 8 and Catalysts 2-7 after redox aging were tested separately over a Synthetic Catalyst Activity Test (SCAT) device for TWC Light-off tests. The thermal redox condition was described under Example 2. The Light-off tests were performed with a perturbed gas flow switched from rich (Lambda= 0.96)-to-lean (Lambda= 1.04)-to-rich (Lambda= 0.96) at a frequency of 1Hz, with the gas compositions consist of 10 vol.% H₂O + 14 vol.% CO₂ + 1080 ppm C₃H₆ + 120 ppm Iso-C₅H₁₂ + 0.17 vol.% H₂ + 0.5~2.28 vol.% CO + 0.49~1.28 vol.% O₂ + 500 ppm NO balanced with N₂. The test was run from room temperature to 600 °C at a ramp rate of 20 °C/min, at a GHSV of 200,000 hr⁻¹. An FTIR was used to continuously measure the gas product composition during the test. Before the light off tests, rich- or lean-pretreatment was applied to catalysts. The conversions of HC, CO and NOₓ were calculated from comparing the concentration of the feed gas and the gas at the outlets of the catalysts.

The T₅₀ and T₇₅ light off temperatures of HCs and CO conversions, and NOₓ η=500 °C light off conversion of aged Reference Catalysts 1 and 8 and Catalysts 2-7 are shown in **Table 3.** For Pt-TWC single layer (Pt loading at 20 g/ft³), significantly improved aged Pt performance was observed with direct addition of Mn salt to the washcoat. Specifically, TWC light-off performance was significantly improved with low Mn loading Mn (50 g/ft³), i.e. Catalyst 2, while further increase of Mn loading to 75 - 250 g/ft³ (Catalysts 3-7) led to less TWC improvement, as compared to Reference Catalyst 1. The performance benefit could only be achieved when both Pt and Mn were present. Mn-only TWC (without Pt, Catalyst 8) had no NOₓ reduction activity, and very low oxidation activity after aging.

**Table 3: SCAT Light Off Performance Results**

| | T₅₀ (°C) | | T₇₅ (°C) | | η=500 °C (%) |
|---|---|---|---|---|---|
| | HCs | CO | HCs | CO | NOₓ |
| **Reference Catalyst 1 (aged)** | 481 | 456 | 511 | 512 | 12 |
| **Catalyst 2 (aged)** | 405 | 380 | 443 | 424 | 87 |
| **Catalyst 3 (aged)** | 438 | 421 | 472 | 469 | 49 |
| **Catalyst 4 (aged)** | 451 | 432 | 488 | 495 | 36 |
| **Catalyst 5 (aged)** | 462 | 448 | 494 | 499 | 35 |
| **Catalyst 6 (aged)** | 462 | 447 | 488 | 493 | 47 |
| **Catalyst 7 (aged)** | 470 | 460 | 496 | 500 | 39 |
| **Reference Catalyst 8 (aged)** | < 20% conversion below 550 °C | | | | 0 |

### EXAMPLE 5: LIGHT OFF PERFORMANCE IMPROVEMENT

Reference Catalysts 1 and 15 and Catalysts 9-14 after redox aging were tested separately over a SCAT device for TWC Light-off tests. The thermal redox condition was described under Example 2. The Light-off test condition was the same as described in Example 4.

The T₅₀ and T₇₅ light off temperatures of HCs and CO conversions, and NOₓ η=500 °C light off conversion of aged Reference Catalysts 1 and 15 and Catalysts 9-14 are shown in **Table 4.** For Pt-TWC single layer (Pt loading at 20 g/ft³), significantly improved aged Pt performance was observed with direct addition of Mg salt to the washcoat. Specifically, TWC light-off performance was significantly improved with low Mg loading Mg (50), i.e. Catalyst 9, while further increase of Mg loading to 75 ~ 250 g/ft³ (Catalysts 10-14) led to less TWC improvement, as compared to Reference Catalyst 1. The performance benefit could only be achieved when both Pt and Mg were present. Mg-only TWC (without Pt) had no NOx reduction activity, and very low oxidation activity after aging (Catalyst 15).

**Table 4: SCAT Light Off Performance Results**

| | T₅₀ (°C) | | T₇₅ (°C) | | η=500 °C (%) |
|---|---|---|---|---|---|
| | HCs | CO | HCs | CO | NOₓ |
| **Reference Catalyst 1 (aged)** | 481 | 456 | 511 | 512 | 12 |
| **Catalyst 9 (aged)** | 422 | 393 | 471 | 447 | 82 |
| **Catalyst 10 (aged)** | 471 | 468 | 494 | 500 | 31 |
| **Catalyst 11 (aged)** | 461 | 448 | 484 | 482 | 38 |
| **Catalyst 12 (aged)** | 464 | 454 | 489 | 492 | 61 |
| **Catalyst 13 (aged)** | 464 | 449 | 483 | 482 | 57 |
| **Catalyst 14 (aged)** | 446 | 424 | 464 | 456 | 69 |
| **Reference Catalyst 15 (aged)** | < 20% conversion below 550 °C | | | | 0 |

### EXAMPLE 6: NOₓ, CO, AND THC CONVERSION COMPARISONS DURING TWC LAMBDA SWEEP

Reference Catalyst 1 and Catalysts 2-4 and 9-11 after redox aging were tested separately over a SCAT device for TWC Lambda sweep tests. The thermal redox condition was described under Example 2. The Lambda sweep test was performed by measuring NOx, CO, and THC conversions of each sample when lambda is swept from lean (lambda=1.04) to rich (0.98) gas conditions over an approx. 45 min period, with perturbation (1 HZ), at constant GHSV= 200K h⁻¹ and constant temperatures, respectively at 300 °C, 400 °C, and 500 °C.

**FIGs. 7a-7c** showed that for Pt-TWC single layer (Pt loading at 20 g/ft³), significantly improved aged Pt-TWC lambda sweep performance at 500 °C was observed with direct addition of Mn and Mg salt to the washcoat. Consistent with light off performance benefit as shown in **Tables 3** and **4,** TWC lambda sweep performance was significantly improved with low loading Mn(50) and Mg(50) salt addition. More significant performance enhancement was observed at fuel rich than fuel lean.

### EXAMPLE 7: LIGHT OFF PERFORMANCE IMPROVEMENT

Reference Catalyst 1 and Catalysts 16 - 19 after redox aging were tested separately over a SCAT device for TWC Light-off tests. The thermal redox condition was described under Example 2. The Light-off test condition was the same as described in Example 4.

The T₅₀ and T₇₅ light off temperatures of HCs and CO conversions, and NOₓ η=500 °C light off conversion of aged Reference Catalyst 1 and Catalysts 16-19 are shown in **Table 5.** For Pt-TWC single layer (Pt loading at 20 g/ft³), significantly improved aged Pt performance was observed with direct addition of Fe (optimized Fe loading at 150g/ft³, i.e., Catalyst 18) salt to the washcoat, especially NOₓ performance. Further increase or decrease of Fe loading in the 50 ~ 200 g/ft³ range (Catalysts 16, 17, and 19) led to less NOₓ conversion, and inferior CO and THC oxidation conversion, as compared to the Reference Catalyst 1.

**Table 5: SCAT Light Off Performance Results**

| | T₅₀ (°C) | | T₇₅ (°C) | | η=500 °C (%) |
|---|---|---|---|---|---|
| | HCs | CO | HCs | CO | NOₓ |
| **Reference Catalyst 1 (aged)** | 481 | 456 | 511 | 512 | 12 |
| **Catalyst 16 (aged)** | 511 | 505 | 538 | 545 | 15 |
| **Catalyst 17 (aged)** | 503 | 493 | 527 | 537 | 18 |
| **Catalyst 18 (aged)** | 452 | 411 | 507 | 492 | 58 |
| **Catalyst 19 (aged)** | 510 | 501 | 546 | 557 | 22 |

### EXAMPLE 8: LIGHT OFF PERFORMANCE IMPROVEMENT

Reference Catalyst 1 and Catalysts 20-23 after redox aging were tested separately over a SCAT device for TWC Light-off tests. The thermal redox condition was described under Example 2. The Light-off test condition was the same as described in Example 4.

The T₅₀ and T₇₅ light off temperatures of HCs and CO conversions, and η=500 °C light off conversions for HCs, CO, and NOx of aged Reference Catalyst 1 and Catalysts 20-23 are shown in **Table 6.** Different from other dopants (Mn, Mg, Fe), the light-off performance for Cu-doped Pt catalysts showed "volcano-shape" profiles, which increased with increasing temperature at low-temperature region (150 to 350 °C), while leveled off or decreased with higher temperature up to 600 °C. For Pt-TWC single layer (Pt loading at 20 g/ft³), significantly improved aged Pt performance was observed with direct addition of Cu salt to the washcoat (Catalysts 20-23) at low-temperature (< 350 °C) CO and THC conversions, as compared to Reference Catalyst 1. However, at high temperature region (> 350 °C), there was significant poison to Pt by Cu for HC oxidation. In terms of NOx conversions, Cu poisoned Pt at the entire temperature range (150 °C to 600 °C) with Cu additions.

**Table 6: SCAT Light Off Performance Results**

| | T₅₀ (°C) | | T₇₅ (°C) | | η=500 °C (%) | | |
|---|---|---|---|---|---|---|---|
| | HCs | CO | HCs | CO | HCs | CO | NOₓ |
| **Reference Catalyst 1 (aged)** | 481 | 456 | 511 | 512 | 69 | 72 | 12 |
| **Catalyst 20 (aged)** | Did not reach 50% conversion | 290 | Did not reach 75% conversion | | 18 | 59 | 0 |
| **Catalyst 21 (aged)** | 580 | 270 | Did not reach 75% conversion | 297 | 27 | 71 | 2 |
| **Catalyst 22 (aged)** | 568 | 272 | | 291 | 35 | 72 | 1 |
| **Catalyst 23 (aged)** | 558 | 276 | | 297 | 37 | 74 | 3 |

### Reference Catalyst 24

Reference Catalyst 24 is a single-layered TWC, coated on a cordierite substrate block. Catalytic region consists of Pt supported on a washcoat of CeZr mixed oxide (0.8 g/in³), La-stabilized alumina (0.5 g/in³), using Pt nitrate precursor. The washcoat loading of catalytic region was about 1.3 g/in³ with a Pt loading of 11 g/ft³.

### Catalyst 25

Catalyst 25 is a single-layered TWC, coated on a cordierite substrate block. Catalytic region consists of Pt and Mn supported on a washcoat of CeZr mixed oxide (0.8 g/in³), La-stabilized alumina (0.5 g/in³), using Pt nitrate and Mn acetate tetrahydrate precursors. The washcoat loading of catalytic region was about 1.3 g/in³ with a Pt loading of 11 g/ft³ and a Mn loading of 13.5 g/ft³.

### Catalyst 26

Catalyst 26 is a single-layered TWC, coated on a cordierite substrate block. Catalytic region consists of Pt and Mn supported on a washcoat of CeZr mixed oxide (0.8 g/in³), La-stabilized alumina (0.5 g/in³), using Pt nitrate and Mn acetate tetrahydrate precursors. The washcoat loading of catalytic region was about 1.3 g/in³ with a Pt loading of 11 g/ft³ and a Mn loading of 27.1 g/ft³.

### Catalyst 27

Catalyst 27 is a single-layered TWC, coated on a cordierite substrate block. Catalytic region consists of Pt and Mn supported on a washcoat of CeZr mixed oxide (0.8 g/in³), La-stabilized alumina (0.5 g/in³), using Pt nitrate and Mn acetate tetrahydrate precursors. The washcoat loading of catalytic region was about 1.3 g/in³ with a Pt loading of 11 g/ft³ and a Mn loading of 40.6 g/ft³.

### Catalyst 28

Catalyst 28 is a single-layered TWC, coated on a cordierite substrate block. Catalytic region consists of Pt and Mn supported on a washcoat of CeZr mixed oxide (0.8 g/in³), La-stabilized alumina (0.5 g/in³), using Pt nitrate and Mn acetate tetrahydrate precursors. The washcoat loading of catalytic region was about 1.3 g/in³ with a Pt loading of 11 g/ft³ and a Mn loading of 54.1 g/ft³.

### Catalyst 29

Catalyst 29 is a single-layered TWC, coated on a cordierite substrate block. Catalytic region consists of Pt and Mn supported on a washcoat of CeZr mixed oxide (0.8 g/in³), La-stabilized alumina (0.5 g/in³), using Pt nitrate and Mn acetate tetrahydrate precursors. The washcoat loading of catalytic region was about 1.3 g/in³ with a Pt loading of 11 g/ft³ and a Mn loading of 67.6 g/ft³.

### Catalysts 30-38

These Catalysts have been made similar to those in Catalysts 25-29 (the washcoat loading of catalytic region was about 1.3 g/in³ with a Pt loading of 11 g/ft³ and various metal loadings). And they have been summarized in **Table 7** below.

**Table 7**

| | **Mn: Pt (molar ratio)** | **Mg: Pt (molar ratio)** | **Zn: Pt (molar ratio)** |
|---|---|---|---|
| **Reference Catalyst 24** | 11 g/ft³ Pt with 1.3 g/in³ washcoat | | |
| **Catalyst 25** | **~4:1** (13.5 g/ft³ Mn; 11 g/ft³ Pt) | -- | -- |
| **Catalyst 26** | **~9:1** (27 g/ft³ Mn; 11 g/ft³ Pt) | -- | -- |
| **Catalyst 27** | **~13:1** (40.6 g/ft³ Mn; 11 g/ft³ Pt) | -- | -- |
| **Catalyst 28** | **~18:1** (54.1 g/ft³ Mn; 11 g/ft³ Pt) | -- | -- |
| **Catalyst 29** | **~22:1** (67.6 g/ft³ Mn; 11 g/ft³ Pt) | -- | -- |
| **Catalyst 30** | -- | **~10:1** (13.5 g/ft³ Mg; 11 g/ft³ Pt) | -- |
| **Catalyst 31** | -- | **~20:1** (27 g/ft³ Mg; 11 g/ft³ Pt) | -- |
| **Catalyst 32** | -- | **~30:1** (40.6 g/ft³ Mg; 11 g/ft³ Pt) | -- |
| **Catalyst 33** | -- | **~40:1** (54.1 g/ft³ Mg; 11 g/ft³ Pt) | -- |
| **Catalyst 34** | -- | **~50:1** (67.6 g/ft³ Mg; 11 g/ft³ Pt) | -- |
| **Catalyst 35** | -- | -- | **~4:1** (13.5 g/ft³ Zn; 11 g/ft³ Pt) |
| **Catalyst 36** | -- | -- | **~7:1** (27 g/ft³ Zn; 11 g/ft³ Pt) |
| **Catalyst 37** | -- | -- | **~11:1** (40.6 g/ft³ Zn; 11 g/ft³ Pt) |
| **Catalyst 38** | -- | -- | **~15:1** (54.1 g/ft³ Zn; 11 g/ft³ Pt) |

### EXAMPLE 9: LIGHT OFF PERFORMANCE IMPROVEMENT

Reference Catalyst 24 and Catalysts 25 - 29 after redox aging were tested separately over a SCAT device for TWC Light-off tests. The thermal redox condition was described under Example 2. The Light-off test condition was the same as described in Example 4.

The T₅₀ and T₇₅ light off temperatures of HCs and CO conversions, and NOₓ η=550 °C light off conversion of aged Reference Catalyst 24 and Catalysts 25 - 29 are shown in **Table 8.** For Pt-TWC single layer (Pt loading at 11 g/ft³), significantly improved aged Pt performance was observed with direct addition of Mn salt to the washcoat. Specifically, Continuous TWC improvements were observed with increasing Mn loading from 13.5 to 54.1 g/ft³ (Catalysts 25-28), while further increase of Mn loading to 67.6 g/ft³ (Catalyst 29) led to less improvement, as compared to Reference Catalyst 24.

**Table 8: SCAT Light Off Performance Results**

| | T₅₀ (°C) | | T₇₅ (°C) | | η=550 °C (%) |
|---|---|---|---|---|---|
| | HCs | CO | HCs | CO | NOₓ |
| **Reference Catalyst 24 (aged)** | 510 | 511 | 538 | 555 | 21 |
| **Catalyst 25 (aged)** | 503 | 492 | 530 | 546 | 30 |
| **Catalyst 26 (aged)** | 495 | 485 | 520 | 530 | 38 |
| **Catalyst 27 (aged)** | 482 | 473 | 505 | 517 | 46 |
| **Catalyst 28 (aged)** | 466 | 459 | 490 | 498 | 68 |
| **Catalyst 29 (aged)** | 498 | 499 | 517 | 531 | 45 |

### EXAMPLE 10: NO_{X}, CO, AND THC CONVERSION COMPARISONS DURING TWC LAMBDA SWEEP

Reference Catalysts 24 and Catalysts 25-29 after redox aging were tested separately over a SCAT device for TWC Lambda sweep tests. The thermal redox condition was described under Example 2. The Lambda sweep test condition was described under Example 6.

**FIGs. 8a-8c** showed that for Pt-TWC single layer (Pt loading at 11 g/ft³), significantly improved aged Pt-TWC lambda sweep performance at 500 °C was observed with direct addition of Mn salt to the washcoat. Consistent with LO performance benefit as shown in **Table 8,** TWC lambda sweep performance was significantly improved with increasing Mn loading from 13.5 to 54.1 g/ft³, while further increase of Mn loading to 67.6 g/ft³ led to less improvement.

### EXAMPLE 11: LIGHT OFF PERFORMANCE IMPROVEMENT

Reference Catalyst 24 and Catalysts 30-34 after redox aging were tested separately over a SCAT device for TWC Light-off tests. The thermal redox condition was described under Example 2. The Light-off test condition was the same as described in Example 4.

The T₅₀ and T₇₅ light off temperatures of HCs and CO conversions, and NOₓ η=550 °C light off conversion of aged Reference Catalyst 24 and Catalysts 30 - 34 are shown in **Table 9.** For Pt-TWC single layer (Pt loading at 11 g/ft³), significantly improved aged Pt performance was observed with direct addition of Mg salt to the washcoat. Specifically, Continuous TWC improvements were observed with increasing Mg loading from 13.5 to 54.1 g/ft³ (Catalysts 30-33), while further increase of Mg loading to 67.6 (Catalyst 34) led to less improvement, as compared to Reference Catalyst 24.

**Table 9: SCAT Light Off Performance Results**

| | T₅₀ (°C) | | T₇₅ (°C) | | η=550 °C (%) |
|---|---|---|---|---|---|
| | HCs | CO | HCs | CO | NOₓ |
| **Reference Catalyst 24 (aged)** | 510 | 511 | 538 | 555 | 21 |
| **Catalyst 30 (aged)** | 509 | 503 | 532 | 543 | 25 |
| **Catalyst 31 (aged)** | 484 | 478 | 506 | 513 | 58 |
| **Catalyst 32 (aged)** | 470 | 462 | 498 | 504 | 51 |
| **Catalyst 33 (aged)** | 465 | 462 | 491 | 500 | 51 |
| **Catalyst 34 (aged)** | 483 | 483 | 502 | 511 | 64 |

### EXAMPLE 12: NO_{X}, CO, AND THC CONVERSION COMPARISONS DURING TWC LAMBDA SWEEP

Reference Catalysts 24 and Catalysts 30-34 after redox aging were tested separately over a SCAT device for TWC Lambda sweep tests. The thermal redox condition was described under Example 2. The Lambda sweep test condition was described under Example 6.

**FIGs. 9a-9c** showed that for Pt-TWC single layer (Pt loading at 11 g/ft³), significantly improved aged Pt-TWC lambda sweep performance at 500 °C was observed with direct addition of Mg salt to the washcoat. Consistent with LO performance benefit as shown in **Table 9,** TWC lambda sweep performance was significantly improved with increasing Mg loading from 27.1 and 67.6 g/ft³.

### EXAMPLE 13: LIGHT OFF PERFORMANCE IMPROVEMENT

Reference Catalyst 24 and Catalysts 35-38 after redox aging were tested separately over a SCAT device for TWC Light-off tests. The thermal redox condition was described under Example 2. The Light-off test condition was the same as described in Example 4.

The T₅₀ and T₇₅ light off temperatures of HCs and CO conversions, and NOₓ η=550 °C light off conversion of aged Reference Catalyst 24 and Catalysts 35-38 are shown in **Table 10.** For Pt-TWC single layer (Pt loading at 11 g/ft³), significantly improved aged Pt performance was observed with direct addition of Zn salt to the washcoat. Specifically, Continuous TWC improvements were observed with increasing Zn loading from 13.5 to 40.6 g/ft³ (Catalysts 35-37), while further increase of Zn loading to 54.1 g/ft³ (Catalyst 38) led to less NOₓ conversion improvement, as compared to Reference Catalyst 24.

**Table 10: SCAT Light Off Performance Results**

| | T₅₀ (°C) | | T₇₅ (°C) | | η=550 °C (%) |
|---|---|---|---|---|---|
| | HCs | CO | HCs | CO | NOₓ |
| **Reference Catalyst 24 (aged)** | 510 | 511 | 538 | 555 | 21 |
| **Catalyst 35 (aged)** | 507 | 500 | 534 | 551 | 20 |
| **Catalyst 36 (aged)** | 490 | 487 | 510 | 521 | 39 |
| **Catalyst 37 (aged)** | 476 | 464 | 504 | 507 | 74 |
| **Catalyst 38 (aged)** | 471 | 460 | 501 | 506 | 52 |

### EXAMPLE 14: NO_{X}, CO, AND THC CONVERSION COMPARISONS DURING TWC LAMBDA SWEEP

Reference Catalysts 24 and Catalysts 35-38 after redox aging were tested separately over a Synthetic Catalyst Activity Test (SCAT) device for TWC Lambda sweep tests. The thermal redox condition was described under Example 2. The Lambda sweep test condition was described under Example 6.

**FIGs. 10a-10c** showed that for Pt-TWC single layer (Pt loading at 11 g/ft³), significantly improved aged Pt-TWC lambda sweep performance at 500 °C was observed with direct addition of Zn salt to the washcoat. Consistent with light off performance benefit as shown in **Table 10,** continuous TWC improvements were observed with increasing Zn loading from 13.5 to 40.6 g/ft³, while further increase of Zn loading to 54.1 g/ft³ led to less improvement.

### Reference Catalyst 39

Reference Catalyst 39 is a single-layered TWC, coated on a cordierite substrate block. Catalytic region consists of Pt supported on a washcoat of CeZr mixed oxide (1 g/in³), La-stabilized alumina (1 g/in³), using Pt nitrate precursor. The washcoat loading of catalytic region was about 2 g/in³ with a Pt loading of 60 g/ft³ and a Ba loading of 250 g/ft³.

### Catalyst 40

Catalyst 40 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 60 g/ft³, a Ba loading of 250 g/ft³, and a Mn loading of 60 g/ft³.

### Catalyst 41

Catalyst 41 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 60 g/ft³, a Ba loading of 250 g/ft³, and a Mn loading of 90 g/ft³.

### Catalyst 42

Catalyst 42 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 60 g/ft³, a Ba loading of 250 g/ft³, and a Mn loading of 120 g/ft³.

### Catalyst 43

Catalyst 43 is a single-layered TWC, coated on a cordierite substrate block. Catalytic region consists of Pt and Mn supported on a washcoat of CeZr mixed oxide (1 g/in³), La-stabilized alumina (1 g/in³), using Pt nitrate and Mn acetate tetrahydrate precursors. The washcoat loading of catalytic region was about 2 g/in³ with a Pt loading of 60 g/ft³, a Ba loading of 250 g/ft³, and a Mn loading of 150 g/ft³.

### Catalysts 44-52

These Catalysts have been made similar to those in Catalysts 40-43 (the washcoat loading of catalytic region was about 2 g/in³ with a Pt loading of 60 g/ft³, a Ba loading of 250 g/ft³, and various metal loadings). And they have been summarized in **Table 11** below.

**Table 11**

| | **Mn: Pt (molar ratio)** | **Mg: Pt (molar ratio)** | **Zn: Pt (molar ratio)** |
|---|---|---|---|
| **Reference Catalyst 39** | 60 g/ft³ Pt and 250 g/ft³ Ba with 2 g/in³ washcoat | | |
| **Catalyst 40** | **~4:1** (60 g/ft³ Mn; 60 g/ft³ Pt) | -- | -- |
| **Catalyst 41** | **~5:1** (90 g/ft³ Mn; 60 g/ft³ Pt) | -- | -- |
| **Catalyst 42** | **~7:1** (120 g/ft³ Mn; 60 g/ft³ Pt) | -- | -- |
| **Catalyst 43** | **~9:1** (150 g/ft³ Mn; 60 g/ft³ Pt) | -- | -- |
| **Catalyst 44** | -- | **~8:1** (60 g/ft³ Mg; 60 g/ft³ Pt) | -- |
| **Catalyst 45** | -- | **~12:1** (90 g/ft³ Mg; 60 g/ft³ Pt) | -- |
| **Catalyst 46** | -- | **~16:1** (120 g/ft³ Mg; 60 g/ft³ Pt) | -- |
| **Catalyst 47** | -- | **~20:1** (150 g/ft³ Mg; 60 g/ft³ Pt) | -- |
| **Catalyst 48** | -- | -- | **~1.5:1** (30 g/ft³ Zn; 60 g/ft³ Pt) |
| **Catalyst 49** | -- | -- | **~3:1** (60 g/ft³ Zn; 60 g/ft³ Pt) |
| **Catalyst 50** | -- | -- | **~5:1** (90 g/ft³ Zn; 60 g/ft³ Pt) |
| **Catalyst 51** | -- | -- | **~6:1** (120 g/ft³ Zn; 60 g/ft³ Pt) |
| **Catalyst 52** | -- | -- | **~8:1** (150 g/ft³ Zn; 60 g/ft³ Pt) |

### EXAMPLE 15: LIGHT OFF PERFORMANCE IMPROVEMENT

Reference Catalyst 39 and Catalysts 40-43 after redox aging were tested separately over a SCAT device for TWC Light-off tests. The thermal redox condition was described under Example 2. The Light-off test condition was the same as described in Example 4.

The T₅₀ and T₇₅ light off temperatures of HCs and CO conversions, and NOₓ η=450 °C light off conversion of aged Reference Catalyst 39 and Catalysts 40 - 43 are shown in **Table 12.** For Pt-TWC single layer (Pt at 60 g/ft³), significantly improved aged Pt performance was observed with direct loading addition of Mn salt to the washcoat. Specifically, Continuous TWC improvements were observed with increasing Mn loading from 60 to 150 g/ft³ (Catalysts 40-43), as compared to Reference Catalyst 39.

**Table 12: SCAT Light Off Performance Results**

| | T₅₀ (°C) | | T₇₅ (°C) | | η=450 °C (%) |
|---|---|---|---|---|---|
| | HCs | CO | HCs | CO | NOₓ |
| **Reference Catalyst 39 (aged)** | 423 | 414 | 444 | 442 | 63 |
| **Catalyst 40 (aged)** | 414 | 396 | 435 | 427 | 69 |
| **Catalyst 41 (aged)** | 404 | 384 | 426 | 412 | 84 |
| **Catalyst 42 (aged)** | 409 | 389 | 430 | 420 | 75 |
| **Catalyst 43 (aged)** | 404 | 384 | 431 | 413 | 80 |

### EXAMPLE 16: NO_{X}, CO, AND THC CONVERSION COMPARISONS DURING TWC LAMBDA SWEEP

Reference Catalyst 39 and Catalysts 40-43 after redox aging were tested separately over a SCAT device for TWC Lambda sweep tests. The thermal redox condition was described under Example 2. The Lambda sweep test condition was described under Example 6.

**FIGs. 11a-11c** showed that for Pt-TWC single layer (Pt loading at 60 g/ft³), significantly improved aged Pt-TWC lambda sweep performance at 500 °C was observed with direct addition of Mn salt to the washcoat. Consistent with light off performance benefit as shown in **Table 12,** TWC lambda sweep performance was significantly improved with increasing Mn loading from 60 to 150 g/ft³.

### EXAMPLE 17: LIGHT OFF PERFORMANCE IMPROVEMENT

Reference Catalyst 39 and Catalysts 44-47 after redox aging were tested separately over a SCAT device for TWC Light-off tests. The thermal redox condition was described under Example 2. The Light-off test condition was the same as described in Example 4.

The T₅₀ and T₇₅ light off temperatures of HCs and CO conversions, and NOₓ η=450 °C light off conversion of aged Reference Catalyst 39 and Catalysts 44-47 are shown in **Table 13.** For Pt-TWC single layer (Pt at 60 g/ft³), significantly improved aged Pt performance was observed with direct loading addition of Mg salt to the washcoat. Specifically, TWC improvements were observed with high Mg loading at 150 g/ft³ (Catalyst47), as compared to Reference Catalyst 39.

**Table 13: SCAT Light Off Performance Results**

| | T₅₀ (°C) | | T₇₅ (°C) | | η=450 °C (%) |
|---|---|---|---|---|---|
| | HCs | CO | HCs | CO | NOₓ |
| **Reference Catalyst 39 (aged)** | 423 | 414 | 444 | 442 | 63 |
| **Catalyst 44 (aged)** | 420 | 414 | 442 | 443 | 70 |
| **Catalyst 45 (aged)** | 422 | 416 | 443 | 441 | 67 |
| **Catalyst 46 (aged)** | 423 | 417 | 443 | 442 | 70 |
| **Catalyst 47 (aged)** | 400 | 381 | 424 | 410 | 86 |

### EXAMPLE 18: NO_{X}, CO, AND THC CONVERSION COMPARISONS DURING TWC LAMBDA SWEEP

Reference Catalyst 39 and Catalysts 44-47 after redox aging were tested separately over a SCAT device for TWC Lambda sweep tests. The thermal redox condition was described under Example 2. The Lambda sweep test condition was described under Example 6.

**FIGs. 12a-12c** showed that for Pt-TWC single layer (Pt loading at 60 g/ft³), significantly improved aged Pt-TWC lambda sweep performance at 500 °C was observed with direct addition of Mg salt to the washcoat. Consistent with LO performance benefit as shown in **Table 13,** TWC lambda sweep performance was significantly improved with high Mg loading at 150 g/ft³.

### EXAMPLE 19: LIGHT OFF PERFORMANCE IMPROVEMENT

Reference Catalyst 39 and Catalysts 48-52 after redox aging were tested separately over a SCAT device for TWC Light-off tests. The thermal redox condition was described under Example 2. The Light-off test condition was the same as described in Example 4.

The T₅₀ and T₇₅ light off temperatures of HCs and CO conversions, and NOₓ η=450 °C light off conversion of aged Reference Catalyst 39 and Catalysts 48-52 are shown in **Table 14.** For Pt-TWC single layer (Pt at 60 g/ft³), significantly improved aged Pt performance was observed with direct addition of Zn salt to the washcoat. Specifically, Continuous TWC improvements were observed with increasing Zn loading from 30 to 60 g/ft³ (Catalysts 48-49) and optimized at 60 g/ft³ (Catalyst 49). Further increase of Zn loading (Catalysts 50-52) led to lower performance improvement, as compared to Reference Catalyst 39.

**Table 14: SCAT Light Off Performance Results**

| | T₅₀ (°C) | | T₇₅ (°C) | | η=450 °C (%) |
|---|---|---|---|---|---|
| | HCs | CO | HCs | CO | NOₓ |
| **Reference Catalyst 39 (aged)** | 423 | 414 | 444 | 442 | 63 |
| **Catalyst 48 (aged)** | 414 | 402 | 435 | 431 | 76 |
| **Catalyst 49 (aged)** | 402 | 395 | 419 | 416 | 88 |
| **Catalyst 50 (aged)** | 413 | 402 | 436 | 432 | 75 |
| **Catalyst 51 (aged)** | 412 | 404 | 437 | 431 | 76 |
| **Catalyst 52 (aged)** | 412 | 403 | 436 | 432 | 75 |

### EXAMPLE 20: NO_{X}, CO, AND THC CONVERSION COMPARISONS DURING TWC LAMBDA SWEEP

Reference Catalyst 39 and Catalysts 48-52 after redox aging were tested separately over a SCAT device for TWC Lambda sweep tests. The thermal redox condition was described under Example 2. The Lambda sweep test condition was described under Example 6.

**FIGs. 13a-13c** showed that for Pt-TWC single layer (Pt loading at 60 g/ft³), significantly improved aged Pt-TWC lambda sweep performance ay 500 °C was observed with direct addition of Zn salt to the washcoat. Consistent with LO performance benefit as shown in **Table 14,** TWC lambda sweep performance was significantly improved with increasing Zn loading from 30 to 60 g/ft³ and optimized at 60 g/ft³. Further increase of Zn loading led to lower performance improvement.

### Reference Catalyst 53

Reference Catalyst 53 is a double layer bottom zoned TWC, coated on a cordierite substrate block, with top layer non-zoned and 100% coverage.

### First Catalytic Region:

The first catalytic region consists of Pt supported on a washcoat of CeZr mixed oxide (1 g/in³) and La-stabilized alumina (1 g/in³). The washcoat loading of the first catalytic region was about 2 g/in³ with a Pt loading of 88 g/ft³.

The washcoat was then coated from the outlet face using standard coating procedures with total coating depth targeted of 50 % of the substrate length, dried at 100 °C and calcined at 500 °C for 45 mins.

### Second Catalytic Region:

The second catalytic region consists of Pd supported on a washcoat of CeZr mixed oxide (1 g/in³), La-stabilized alumina (1 g/in³) and barium acetate. The washcoat loading of the second catalytic region was about 2 g/in³ with a Pd loading of 96 g/ft³ and a Ba loading of 300 g/ft³.

This washcoat was then coated from the inlet face of a ceramic substrate (600 cpsi, 2.5 mil wall thickness) using standard coating procedures with coating depth targeted of 50% of the substrate length, dried at 100 °C and calcined at 500 °C for 45 mins.

### Third Catalytic Region:

The third catalytic region consists of Rh and Pt supported on a washcoat of CeZr mixed oxide (1 g/in³), La-stabilized alumina (1 g/in³). The washcoat loading of the third catalytic region was about 2 g/in³ with a Rh loading of 4 g/ft³ and a Pt loading of 4 g/ft³.

The washcoat was then coated from the outlet face of the ceramic substrate containing the first and second catalytic regions from above, using standard coating procedures with total coating depth targeted of 100 % of the substrate length, dried at 100 °C and calcined at 500 °C for 45 mins.

The configuration of Reference Catalyst 53 is shown in **FIG. 4b** and the coating order is first catalytic region, second catalytic region, then third catalytic region.

### Catalyst 54

Second and third catalytic regions were the same as Reference Catalyst 53, except for First Catalytic region wherein Mn acetate tetrahydrate was added as Mn precursors.

### First Catalytic Region:

The first catalytic region consists of Pt and Mn supported on a washcoat of CeZr mixed oxide (1 g/in³) and La-stabilized alumina (1 g/in³). The washcoat loading of the first catalytic region was about 2 g/in³ with a Pt loading of 88 g/ft³ and a Mn loading of 100 g/ft³ (Mn to Pt molar ratio: ~4:1).

The washcoat was then coated from the outlet face using standard coating procedures with total coating depth targeted of 50 % of the substrate length, dried at 100 °C and calcined at 500 °C for 45mins.

The washcoat was then coated from the outlet face of the ceramic substrate containing the first and second catalytic regions from above, using standard coating procedures with total coating depth targeted of 100 % of the substrate length, dried at 100 °C and calcined at 500 °C for 45mins.

The configuration of Catalyst 54 is shown in **FIG. 4b** and the coating order is first catalytic region, second catalytic region, then third catalytic region.

### Catalyst 55

All three catalytic regions were the same as Catalyst 54, except for First Catalytic Region having a Mn loading of 150 g/ft³ (Mn to Pt molar ratio: ~6:1).

### Catalyst 56

Second and third catalytic regions were the same as Reference Catalyst 53, except for First Catalytic Region wherein Mg nitrate hexahydrate was added as Mg precursors.

### First Catalytic Region:

The first catalytic region consists of Pt and Mg supported on a washcoat of CeZr mixed oxide (1 g/in³) and La-stabilized alumina (1 g/in³). The washcoat loading of the first catalytic region was about 2 g/in³ with a Pt loading of 88 g/ft³ and a Mg loading of 150 g/ft³ (Mg to Pt molar ratio: ~14:1).

The washcoat was then coated from the outlet face using standard coating procedures with total coating depth targeted of 50 % of the substrate length, dried at 100 °C and calcined at 500 °C for 45 mins.

The washcoat was then coated from the outlet face of the ceramic substrate containing the first and second catalytic regions from above, using standard coating procedures with total coating depth targeted of 100 % of the substrate length, dried at 100 °C and calcined at 500 °C for 45 mins.

The configuration of Catalyst 56 is shown in **FIG. 4b** and the coating order is first catalytic region, second catalytic region, then third catalytic region.

### EXAMPLE 21: VEHICLE TESTING PROCEDURES AND RESULTS

The aged samples of Reference Catalyst 53 and Catalysts 54-56 were tested over another vehicle under specific customer driving cycle with 1.5L turbo engine and SULEV30. The bench aging is under 4.6 L engine in the same run for 50 hrs with redox aging cycle, with peak bed temperature at about 820 °C in the catalysts. Results of vehicle exhaust diluted bag data are shown in **Table 15.** For TWC double layer, significantly improved aged TWC vehicle performance was observed with direct addition of Mn or Mg salt to the bottom layer Pt zone Specifically, a 50% NOₓ emission reduction was achieved with Mn (150 g/ft³, Catalyst 55) addition, and a 12% THC emission reduction was achieved with Mg (150 g/ft³, Catalyst 56) addition, as compared to Reference Catalyst 53.

**Table 15: Results of Emissions by Vehicle Diluted Bag Data**

| | Total Exhaust Emissions during Driving Cycle (mg) | | |
|---|---|---|---|
| | THC | CO | NOₓ |
| **Reference Catalyst 53 (aged)** | 390 | 10,793 | 1606 |
| **Catalyst 54 (aged)** | 387 | 11,711 | 930 |
| **Catalyst 55 (aged)** | 416 | 10,138 | 810 |
| **Catalyst 56 (aged)** | 344 | 10,921 | 1592 |

### Reference Catalyst 57

Reference Catalyst 57 is a single-layered TWC, coated on a cordierite substrate block. Catalytic region consists of Pd and Ba supported on a washcoat of CeZr mixed oxide (1 g/in³), La-stabilized alumina (1 g/in³), using Pd nitrate and Ba acetate precursors. The washcoat loading of catalytic region was about 2 g/in³ with a Pd loading of 100 g/ft³ and a Ba loading of 300 g/ft³.

### Catalyst 58

Catalyst 58 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 100 g/ft³, a Ba loading of 300 g/ft³, and a Mn loading of 50 g/ft³ (Mn to Pd molar ratio: ~1:1).

### Catalyst 59

Catalyst 59 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 100 g/ft³, a Ba loading of 300 g/ft³, and a Mn loading of 75 g/ft³ (Mn to Pd molar ratio: ~3:2).

### Catalyst 60

Catalyst 60 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 100 g/ft³, a Ba loading of 300 g/ft³, and a Mn loading of 100 g/ft³ (Mn to Pd molar ratio: ~2:1).

### Catalyst 61

Catalyst 61 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 100 g/ft³, a Ba loading of 300 g/ft³, and a Mn loading of 150 g/ft³ (Mn to Pd molar ratio: ~3:1).

### Catalyst 62

Catalyst 62 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 100 g/ft³, a Ba loading of 300 g/ft³, and a Mn loading of 200 g/ft³(Mn to Pd molar ratio: ~4:1).

### EXAMPLE 22: LIGHT OFF PERFORMANCE IMPROVEMENT

Reference Catalyst 57 and Catalysts 58 - 62 after redox aging were tested separately over a SCAT device for TWC Light-off tests. The thermal redox condition was similar to that described under Example 2, expect with 40 hrs aging duration instead of 16 hr. The Light-off test condition was the same as described in Example 4.

The T₅₀ and T₈₅ light off temperatures of HCs and CO conversions, and NOₓ η=320 °C light off conversion of aged Reference Catalyst 57 and Catalysts 58-62 are shown in **Table 16.** For Pd-TWC single layer (Pd loading at 100 g/ft³), improved aged Pd performance was observed with direct addition of Mn salt to the washcoat. Specifically, continuous NOₓ conversion improvements were observed with increasing Mn loading from 50 to 200 g/ft³ (Catalysts 58-62), as compared to Reference Catalyst 57. Improvements of HC and CO conversions were observed with Mn addition at higher temperature (>T₇₅).

**Table 16: SCAT Light Off Performance Results**

| | T₅₀ (°C) | | T₈₅ (°C) | | η=320 °C (%) |
|---|---|---|---|---|---|
| | HCs | CO | HCs | CO | NOₓ |
| **Reference Catalyst 57 (aged)** | 296 | 293 | 320 | 328 | 75 |
| **Catalyst 58 (aged)** | 300 | 297 | 317 | 323 | 69 |
| **Catalyst 59 (aged)** | 295 | 294 | 311 | 317 | 83 |
| **Catalyst 60 (aged)** | 294 | 294 | 307 | 312 | 91 |
| **Catalyst 61 (aged)** | 292 | 293 | 298 | 308 | 94 |
| **Catalyst 62 (aged)** | 300 | 301 | 305 | 315 | 85 |

### EXAMPLE 23: NO_{X}, CO, AND THC CONVERSION COMPARISONS DURING TWC LAMBDA SWEEP

Reference Catalyst 57 and Catalysts 58-62 after redox aging were tested separately over a SCAT device for TWC Lambda sweep tests. The thermal redox condition was described under Example 22. The Lambda sweep test condition was described under Example 6.

**FIGs. 14a-14c** showed that for Pd-TWC single layer (Pd loading at 100 g/ft³), significantly improved aged Pd-TWC lambda sweep performance at 400 °C was observed with direct addition of Mn salt to the washcoat. Consistent with LO performance benefit as shown in **Table 16,** TWC lambda sweep performance was significantly improved with increasing Mn from 50 to 150 g/ft³.

### EXAMPLE 24: OSC PERFORMANCE

An OSC test was performed with aged Reference Catalyst 57 and Catalysts 58-60 The thermal redox condition was described under Example 22. The OSC test condition was described under Example 2.

As shown in **Table 17** below, Catalysts 59 and 60 demonstrated improved OSC performance for aged catalysts with Mn addition and further improved with increasing Mn loadings.

**Table 17**

| | **OSC at 350 °C (mmol of O)** |
|---|---|
| **Reference Catalyst 57 (aged)** | 0.13 |
| **Catalyst 58 (aged)** | 0.12 |
| **Catalyst 59 (aged)** | 0.16 |
| **Catalyst 60 (aged)** | 0.19 |

### Reference Catalyst 63

Reference Catalyst 63 is a single-layered TWC, coated on a cordierite substrate block. Catalytic region consists of Pd and Ba supported on a washcoat of CeZr mixed oxide (1 g/in³), La-stabilized alumina (1 g/in³), using Pd nitrate and Ba acetate precursors. The washcoat loading of catalytic region was about 2 g/in³ with a Pd loading of 149 g/ft³ and a Ba loading of 400 g/ft³.

### Catalyst 64

Catalyst 64 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 149 g/ft³, a Ba loading of 400 g/ft³, and a Mn loading of 50 g/ft³ (Mn to Pd molar ratio: ~1:2).

### Catalyst 65

Catalyst 65 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 149 g/ft³, a Ba loading of 400 g/ft³, and a Mn loading of 100 g/ft³ (Mn to Pd molar ratio: ~1:1).

### Catalyst 66

Catalyst 66 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 149 g/ft³, a Ba loading of 400 g/ft³, and a Mn loading of 150 g/ft³ (Mn to Pd molar ratio: ~2:1).

### EXAMPLE 25: LIGHT OFF PERFORMANCE IMPROVEMENT

Reference Catalyst 63 and Catalysts 64 - 66 after redox aging were tested separately over a SCAT device for TWC Light-off tests. The thermal redox condition was same to that described under Example 22. The Light-off test condition was the same as described in Example 4.

The T₅₀ and T₈₅ light off temperatures of HCs and CO conversions, and NOₓ η=325 °C light off conversion of aged Reference Catalyst 63 and Catalysts 64 - 66 are shown in **Table 18.** For Pd-TWC single layer (Pd loading at 149 g/ft³), improved aged Pd performance was observed with direct addition of Mn salt to the washcoat. Specifically, Continuous TWC improvements were observed with increasing Mn loading from 50 to 150 g/ft³ (Catalysts 64-66) in general, as compared to Reference Catalyst 63.

**Table 18: SCAT Light Off Performance Results**

| | T₅₀ (°C) | | T₈₅ (°C) | | η=325 °C (%) |
|---|---|---|---|---|---|
| | HCs | CO | HCs | CO | NOₓ |
| **Reference Catalyst 63 (aged)** | 286 | 284 | 311 | 313 | 75 |
| **Catalyst 64 (aged)** | 289 | 287 | 304 | 311 | 80 |
| **Catalyst 65 (aged)** | 291 | 288 | 311 | 317 | 88 |
| **Catalyst 66 (aged)** | 291 | 292 | 301 | 307 | 94 |

### Reference Catalyst 67

Reference Catalyst 67 is a single-layered TWC, coated on a cordierite substrate block. Catalytic region consists of Pd and Ba supported on a washcoat of CeZr mixed oxide (1 g/in³), La-stabilized alumina (1 g/in³), using Pd nitrate and Ba acetate precursors. The washcoat loading of catalytic region was about 2 g/in³ with a Pd loading of 33 g/ft³ and a Ba loading of 400 g/ft³.

### Catalyst 68

Catalyst 68 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 33 g/ft³, a Ba loading of 400 g/ft³, and a Mn loading of 50 g/ft³ (Mn to Pd molar ratio: ~3:1).

### Catalyst 69

Catalyst 69 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 33 g/ft³, a Ba loading of 400 g/ft³, and a Mn loading of 100 g/ft³ (Mn to Pd molar ratio: ~6:1).

### Catalyst 70

Catalyst 70 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 33 g/ft³, a Ba loading of 400 g/ft³, and a Mn loading of 150 g/ft³ (Mn to Pd molar ratio: ~9:1).

### EXAMPLE 26: LIGHT OFF PERFORMANCE IMPROVEMENT

Reference Catalyst 67 and Catalysts 68-70 after redox aging were tested separately over a SCAT device for TWC Light-off tests. The thermal redox condition was same to that described under Example 22. The Light-off test condition was the same as described in Example 4.

The T₅₀ and T₈₅ light off temperatures of HCs and CO conversions, and NOₓ η=350 °C light off conversion of aged Reference Catalyst 67 and Catalysts 68-70 are shown in **Table 19.** For Pd-TWC single layer (Pd loading at 33 g/ft³), improved aged Pd performance was observed with direct addition of Mn salt to the washcoat. Specifically, Continuous TWC improvements were observed with increasing Mn loading from 50 to 150 g/ft³ (Catalysts 68-70), as compared to Reference Catalyst 67.

**Table 19: SCAT Light Off Performance Results**

| | T₅₀ (°C) | | T₈₅ (°C) | | η=350 °C (%) |
|---|---|---|---|---|---|
| | HCs | CO | HCs | CO | NOₓ |
| **Reference Catalyst 67 (aged)** | 335 | 328 | 364 | 379 | 40 |
| **Catalyst 68 (aged)** | 327 | 322 | 353 | 365 | 54 |
| **Catalyst 69 (aged)** | 330 | 328 | 351 | 358 | 73 |
| **Catalyst 70 (aged)** | 326 | 325 | 350 | 355 | 79 |

### Reference Catalyst 71

Reference Catalyst 71 is a single-layered TWC, coated on a cordierite substrate block. Catalytic region consists of Pd and Ba supported on a washcoat of CeZr mixed oxide (0.9 g/in³), La-stabilized alumina (0.9 g/in³), using Pd nitrate and Ba acetate precursors. The washcoat loading of catalytic region was about 1.8 g/in³ with a Pd loading of 40 g/ft³ and a Ba loading of 300 g/ft³.

### Catalyst 72

Catalyst 72 is a single-layered TWC, coated on a cordierite substrate block. Catalytic region consists of Pd, Ba, and Mn supported on a washcoat of CeZr mixed oxide (0.9 g/in³), La-stabilized alumina (0.9 g/in³), using Pd nitrate, Ba acetate, and Mn acetate tetrahydrate precursors. The washcoat loading of catalytic region was about 1.8 g/in³ with a Pd loading of 40 g/ft³, a Ba loading of 300 g/ft³, and a Mn loading of 50 g/ft³ (Mn to Pd molar ratio: ~5:2).

### Catalyst 73

Catalyst 73 is a single-layered TWC, coated on a cordierite substrate block. Catalytic region consists of Pd, Ba, and Mn supported on a washcoat of CeZr mixed oxide (0.9 g/in³), La-stabilized alumina (0.9 g/in³), using Pd nitrate, Ba acetate, and Mn acetate tetrahydrate precursors. The washcoat loading of catalytic region was about 1.8 g/in³ with a Pd loading of 40 g/ft³, a Ba loading of 300 g/ft³, and a Mn loading of 75 g/ft³ (Mn to Pd molar ratio: ~4:1).

### Catalyst 74

Catalyst 74 is a single-layered TWC, coated on a cordierite substrate block. Catalytic region consists of Pd, Ba, and Mn supported on a washcoat of CeZr mixed oxide (0.9 g/in³), La-stabilized alumina (0.9 g/in³), using Pd nitrate, Ba acetate, and Mn acetate tetrahydrate precursors. The washcoat loading of catalytic region was about 1.8 g/in³ with a Pd loading of 40 g/ft³, a Ba loading of 300 g/ft³, and a Mn loading of 100 g/ft³ (Mn to Pd molar ratio: ~5:1).

### Catalyst 75

Catalyst 75 is a single-layered TWC, coated on a cordierite substrate block. Catalytic region consists of Pd, Ba, and Mg supported on a washcoat of CeZr mixed oxide (0.9 g/in³), La-stabilized alumina (0.9 g/in³), using Pd nitrate, Ba acetate, and Mg nitrate hexahydrate precursors. The washcoat loading of catalytic region was about 1.8 g/in³ with a Pd loading of 40 g/ft³, a Ba loading of 300 g/ft³, and a Mg loading of 50 g/ft³ (Mg to Pd molar ratio: ~5:1).

### Catalyst 76

Catalyst 76 is a single-layered TWC, coated on a cordierite substrate block. Catalytic region consists of Pd, Ba, and Mg supported on a washcoat of CeZr mixed oxide (0.9 g/in³), La-stabilized alumina (0.9 g/in³), using Pd nitrate, Ba acetate, and Mg nitrate hexahydrate precursors. The washcoat loading of catalytic region was about 1.8 g/in³ with a Pd loading of 40 g/ft³, a Ba loading of 300 g/ft³, and a Mg loading of 75 g/ft³ (Mg to Pd molar ratio: ~8:1).

### Catalyst 77

Catalyst 77 is a single-layered TWC, coated on a cordierite substrate block. Catalytic region consists of Pd, Ba, and Mg supported on a washcoat of CeZr mixed oxide (0.9 g/in³), La-stabilized alumina (0.9 g/in³), using Pd nitrate, Ba acetate, and Mg nitrate hexahydrate precursors. The washcoat loading of catalytic region was about 1.8 g/in³ with a Pd loading of 40 g/ft³, a Ba loading of 300 g/ft³, and a Mg loading of 100 g/ft³ (Mg to Pd molar ratio: ~11: 1).

### EXAMPLE 27: LIGHT OFF PERFORMANCE IMPROVEMENT

Reference Catalyst 71 and Catalysts 72- 74 after redox aging were tested separately over a SCAT device for TWC Light-off tests. The thermal redox condition was same to that described under Example 22. The Light-off test condition was the same as described in Example 4.

The T₅₀ and T₇₅ light off temperatures of HCs and CO conversions, and NOₓ η=350 °C light off conversion of aged Reference Catalyst 71 and Catalysts 72 - 74 are shown in **Table 20.** For Pd-TWC single layer (Pd loading at 40 g/ft³), improved aged Pd performance was observed with direct addition of Mn salt to the washcoat. Specifically, Continuous TWC improvements were observed with increasing Mn loading from 50 to 100 g/ft³ (Catalysts 72- 74), as compared to Reference Catalyst 71.

**Table 20: SCAT Light Off Performance Results**

| | T₅₀ (°C) | | T₇₅ (°C) | | η=350 °C (%) |
|---|---|---|---|---|---|
| | HCs | CO | HCs | CO | NOₓ |
| **Reference Catalyst 71 (aged)** | 327 | 327 | 338 | 347 | 48 |
| **Catalyst 72 (aged)** | 311 | 311 | 321 | 325 | 58 |
| **Catalyst 73 (aged)** | 311 | 311 | 321 | 324 | 65 |
| **Catalyst 74 (aged)** | 310 | 311 | 320 | 323 | 74 |

### EXAMPLE 28: LIGHT OFF PERFORMANCE IMPROVEMENT

Reference Catalyst 71 and Catalysts 75- 77 after redox aging were tested separately over a SCAT device for TWC Light-off tests. The thermal redox condition was same to that described under Example 22. The Light-off test condition was the same as described in Example 4.

The T₅₀ and T₈₅ light off temperatures of HCs and CO conversions, and NOₓ η=400 °C light off conversion of aged Reference Catalyst 71 and Catalysts 75 - 77 are shown in **Table 21.** For Pd-TWC single layer (Pd loading at 40 g/ft³), improved aged Pd performance was observed with direct addition of Mg salt to the washcoat, especially for NOₓ and CO conversions.

**Table 21: SCAT Light Off Performance Results**

| | T₅₀ (°C) | | T₈₅ (°C) | | η=400 °C (%) |
|---|---|---|---|---|---|
| | HCs | CO | HCs | CO | NOₓ |
| **Reference Catalyst 71 (aged)** | 327 | 327 | 347 | 433 | 74 |
| **Catalyst 75 (aged)** | 332 | 326 | 362 | 369 | 91 |
| **Catalyst 76 (aged)** | 331 | 325 | 362 | 369 | 92 |
| **Catalyst 77 (aged)** | 331 | 324 | 361 | 368 | 92 |

### Reference Catalyst 78

Reference Catalyst 78 is a single-layered TWC, coated on a cordierite substrate block. Catalytic region consists of Pd and Ba supported on a washcoat of CeZr mixed oxide (1 g/in³), La-stabilized alumina (1 g/in³), using Pd nitrate and Ba acetate precursors. The washcoat loading of catalytic region was about 2 g/in³ with a Pd loading of 60 g/ft³ and a Ba loading of 400 g/ft³.

### Catalyst 79

Catalyst 79 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 60 g/ft³, a Ba loading of 400 g/ft³, and a Mn loading of 90 g/ft³ (Mn to Pd molar ratio: ~3:1).

### Catalyst 80

Catalyst 80 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 60 g/ft³, a Ba loading of 400 g/ft³, and a Mn loading of 120 g/ft³ (Mn to Pd molar ratio: ~4:1).

### Catalyst 81

Catalyst 81 is a single-layered TWC, coated on a cordierite substrate block. Catalytic region consists of Pd, Ba, and Mn supported on a washcoat of CeZr mixed oxide (1 g/in³), La-stabilized alumina (1 g/in³), using Pd nitrate, Ba acetate, and Mn acetate tetrahydrate precursors. The washcoat loading of catalytic region was about 2 g/in³ with a Pd loading of 60 g/ft³, a Ba loading of 400 g/ft³, and a Mn loading of 150 g/ft³ (Mn to Pd molar ratio: ~5:1).

### Catalyst 82

Catalyst 82 is a single-layered TWC, coated on a cordierite substrate block. Catalytic region consists of Pd, Ba, and Mg supported on a washcoat of CeZr mixed oxide (1 g/in³), La-stabilized alumina (1 g/in³), using Pd nitrate, Ba acetate, and Mg nitrate hexahydrate precursors. The washcoat loading of catalytic region was about 2 g/in³ with a Pd loading of 60 g/ft³, a Ba loading of 400 g/ft³, and a Mg loading of 30 g/ft³ (Mg to Pd molar ratio: ~2:1).

### Catalyst 83

Catalyst 83 is a single-layered TWC, coated on a cordierite substrate block. Catalytic region consists of Pd, Ba, and Fe supported on a washcoat of CeZr mixed oxide (1 g/in³), La-stabilized alumina (1 g/in³), using Pd nitrate, Ba acetate, and Fe nitrate nonahydrate precursors. The washcoat loading of catalytic region was about 2 g/in³ with a Pd loading of 60 g/ft³, a Ba loading of 400 g/ft³, and a Fe loading of 15 g/ft³ (Fe to Pd molar ratio: ~1:2).

### Catalyst 84

Catalyst 84 is a single-layered TWC, coated on a cordierite substrate block. Catalytic region consists of Pd, Ba, and Cu supported on a washcoat of CeZr mixed oxide (1 g/in³), La-stabilized alumina (1 g/in³), using Pd nitrate, Ba acetate, and Cu nitrate trihydrate precursors. The washcoat loading of catalytic region was about 2 g/in³ with a Pd loading of 60 g/ft³, a Ba loading of 400 g/ft³, and a Cu loading of 15 g/ft³ (Cu to Pd molar ratio: ~1:2).

### Catalyst 85

Catalyst 85 is a single-layered TWC, coated on a cordierite substrate block. Catalytic region consists of Pd, Ba, and Zn supported on a washcoat of CeZr mixed oxide (1 g/in³), La-stabilized alumina (1 g/in³), using Pd nitrate, Ba acetate, and Zn nitrate hexahydrate precursors. The washcoat loading of catalytic region was about 2 g/in³ with a Pd loading of 60 g/ft³, a Ba loading of 400 g/ft³, and a Zn loading of 60 g/ft³ (Zn to Pd molar ratio: ~3:2).

### EXAMPLE 29: LIGHT OFF PERFORMANCE IMPROVEMENT

Reference Catalyst 78 and Catalysts 79- 81 after redox aging were tested separately over a SCAT device for TWC Light-off tests. The thermal redox condition was same to that described under Example 22. The Light-off test condition was the same as described in Example 4.

The T₅₀ and T₈₅ light off temperatures of HCs and CO conversions, and NOₓ η=350 °C light off conversion of aged Reference Catalyst 78 and Catalysts 79 - 81 are shown in **Table 22.** For Pd-TWC single layer (Pd loading at 60 g/ft³), improved aged Pd performance was observed with direct addition of Mn salt to the washcoat. Specifically, Continuous TWC improvements were observed with increasing Mn loading from 90 to 100 g/ft³ (Catalysts 79-81), as compared to Reference Catalyst 78.

**Table 22: SCAT Light Off Performance Results**

| | T₅₀ (°C) | | T₈₅ (°C) | | η=350 °C (%) |
|---|---|---|---|---|---|
| | HCs | CO | HCs | CO | NOₓ |
| **Reference Catalyst 78 (aged)** | 323 | 311 | 347 | 344 | 74 |
| **Catalyst 79 (aged)** | 317 | 311 | 339 | 342 | 89 |
| **Catalyst 80 (aged)** | 313 | 306 | 335 | 335 | 95 |
| **Catalyst 81 (aged)** | 312 | 310 | 332 | 335 | 95 |

### EXAMPLE 30: LIGHT OFF PERFORMANCE IMPROVEMENT

Reference Catalyst 78 and Catalysts 82-85 after redox aging were tested separately over a SCAT device for TWC Light-off tests. The thermal redox condition was same to that described under Example 22. The Light-off test condition was the same as described in Example 4.

The T₅₀ and T₈₅ light off temperatures of HCs and CO conversions, and NOₓ η=350 °C light off conversion of aged Reference Catalyst 78 and Catalysts 82-85 are shown in **Table 23.** For Pd-TWC single layer (Pd loading at 60 g/ft³), improved aged NO conversion was observed with direct addition of Fe (Fe loading at 15 g/ft³) salt to the washcoat, and improved CO and THC conversions with direct addition of Cu (Cu loading at 15 g/ft³) salt to the washcoat (Catalysts 83 and 84). Mg and Zn at the selected loadings had no promotional effect to Pd in this formulation (Catalysts 82 and 85), as compared to Reference Catalyst 78.

**Table 23: SCAT Light Off Performance Results**

| | T₅₀ (°C) | | T₈₅ (°C) | | η=350 °C (%) |
|---|---|---|---|---|---|
| | HCs | CO | HCs | CO | NOₓ |
| **Reference Catalyst 78 (aged)** | 323 | 311 | 347 | 344 | 74 |
| **Catalyst 82 (aged)** | 324 | 312 | 347 | 345 | 67 |
| **Catalyst 83 (aged)** | 314 | 314 | 334 | 336 | 94 |
| **Catalyst 84 (aged)** | 287 | 274 | 326 | 323 | 74 |
| **Catalyst 85 (aged)** | 323 | 320 | 340 | 343 | 54 |

### Reference Catalyst 86

Reference Catalyst 86 is a double layer TWC, coated on a cordierite substrate block.

### First Catalytic Region (bottom layer):

The first catalytic region consists of Pd supported on a washcoat of CeZr mixed oxide (1 g/in³), La-stabilized alumina (1 g/in³) and barium acetate. The washcoat loading of the second catalytic region was about 2 g/in³ with a Pd loading of 149 g/ft³ and a Ba loading of 400 g/ft³.

This washcoat was then coated from the inlet face of the substrate using standard coating procedures with coating depth targeted of 50% of the substrate length, dried at 100 °C and calcined at 500 °C for 45mins; was then coated from the outlet face using standard coating procedures with coating depth targeted of 50% of the substrate length, dried at 100 °C and calcined at 500 °C for 45mins.

### Second Catalytic Region (top layer):

The second catalytic region consists of Rh supported on a washcoat of CeZr mixed oxide (1 g/in³), La-stabilized alumina (1 g/in³). The washcoat loading of the third catalytic region was about 2 g/in³ with a Rh loading of 6 g/ft³.

This washcoat was then coated from the inlet face using standard coating procedures with coating depth targeted of 50% of the substrate length, dried at 100 °C and calcined at 500 °C for 45mins; was then coated from the outlet face using standard coating procedures with coating depth targeted of 50% of the substrate length, dried at 100 °C and calcined at 500 °C for 45mins.

The configuration of Reference Catalyst 86 is shown in **FIG. 2a** and the coating order is first catalytic region, then second catalytic region.

### Catalyst 87

Second Catalytic Region was the same as Reference Catalyst 86, except for First Catalytic Region wherein Mn acetate tetrahydrate was added as Mn precursors.

### First Catalytic Region:

The first catalytic region consists of Pd and Mn supported on a washcoat of CeZr mixed oxide (1 g/in³), La-stabilized alumina (1 g/in³) and barium acetate. The washcoat loading of the second catalytic region was about 2 g/in³ with a Pd loading of 149 g/ft³, a Ba loading of 400 g/ft³, and a Mn loading of 100 g/ft³ (Mn to Pd molar ratio: ~1:1).

The configuration of Reference Catalyst 86 is shown in **FIG. 2a** and the coating order is first catalytic region, then second catalytic region.

### EXAMPLE 31: VEHICLE TESTING PROCEDURES AND RESULTS

The aged samples of Reference Catalyst 86 and Catalyst 87 were tested over another vehicle under specific customer driving cycle, with a 1.5L turbo engine and SULEV30. The bench aging is under 8.1L engine in the same run for 50 hrs with a 4-mode redox cycle, with peak bed temperature at about 950 °C in the catalysts. Results of vehicle exhaust diluted bag data are shown in **Table 24.** For TWC double layer, significantly improved aged TWC vehicle performance was observed with direct addition of Mn (Mn loading at 100 g/ft³) salt to the bottom layer Pd washcoat (Catalyst 87), as compared to Reference Catalyst 86.

**Table 24: Results of Emissions by Vehicle Diluted Bag Data**

| | Total Exhaust Emissions during Driving Cycle (mg) | | |
|---|---|---|---|
| | THC | CO | NOₓ |
| **Reference Catalyst 86 (aged)** | 2996 | 25,678 | 8045 |
| **Catalyst 87 (aged)** | 2815 | 20,245 | 6687 |

## Claims

1. A catalytic article for treating exhaust gas comprising:
a substrate comprising an inlet end and an outlet end with an axial length L,
a first catalytic region comprising a first platinum group metal (PGM) component and
a first metal component,
wherein the first PGM component comprises platinum, palladium, or a combination thereof; wherein the first metal component is Mn, Mg, Fe, Cu, Zn, or a combination thereof; and
wherein the molar ratio between the first metal component and the first PGM component in the first catalytic region is from 120:1 to 1:5.

2. The catalytic article of claim 1, wherein the first catalytic region further comprises a first oxygen storage capacity (OSC) material and/or a first inorganic oxide.

3. The catalytic article of claim 2, wherein the first OSC material is selected from the group consisting of cerium oxide, a ceria-zirconia mixed oxide, and an alumina-ceria-zirconia mixed oxide.

4. The catalytic article of claim 2 or claim 3, wherein the first inorganic oxide is selected from the group consisting of alumina, magnesia, silica, zirconia, lanthanum, cerium, neodymium, praseodymium, yttrium oxides, and mixed oxides or composite oxides thereof.

5. The catalytic article of any one of the preceding claims, wherein the first metal component is Mn, Mg, Zn, or a combination thereof.

6. The catalytic article of any one of the preceding claims, wherein the first PGM component comprises platinum, preferably wherein the molar ratio between the first metal component and the first PGM component in the first catalytic region is from 100:1 to 1:1.

7. The catalytic article of claim 6, wherein the first metal component is Mn, preferably wherein the molar ratio between the first metal component and the first PGM component in the first catalytic region is from 50:1 to 1:1.

8. The catalytic article of claim 6, wherein the first metal component is Mg, preferably wherein the molar ratio between the first metal component and the first PGM component in the first catalytic region is from 100:1 to 5:1.

9. The catalytic article of claim 6, wherein the first metal component is Zn, preferably wherein the molar ratio between the first metal component and the first PGM component in the first catalytic region is from 20:1 to 1:1.

10. The catalytic article of claim 6, wherein the first metal component is Fe and/or Cu, preferably wherein the molar ratio between the first metal component and the first PGM component in the first catalytic region is from 40:1 to 5:1.

11. The catalytic article of any one of claims 1-5, wherein the first PGM component comprises palladium, preferably wherein the molar ratio between the first metal component and the first PGM component in the first catalytic region is from 20:1 to 1:5.

12. The catalytic article of claim 11, wherein the first metal component is Mn, preferably wherein the molar ratio between the first metal component and the first PGM component in the first catalytic region is from 20:1 to 1:4.

13. The catalytic article of claim 11, wherein the first metal component is Mg, preferably wherein the molar ratio between the first metal component and the first PGM component in the first catalytic region is from 20:1 to 1:1.

14. The catalytic article of claim 11, wherein the first metal component is Zn, preferably wherein the molar ratio between the first metal component and the first PGM component in the first catalytic region is from 10:1 to 1:2.

15. The catalytic article of claim 11, wherein the first metal component is Fe and/or Cu, preferably wherein the molar ratio between the first metal component and the first PGM component in the first catalytic region is from 10:1 to 1:5.
